# EUROPEAN PATENT APPLICATION

(11) **EP 2 085 434 A1**
(43) Date of publication of application: **05.08.2009**
(21) Application number: 08425016.6
(22) Date of filing: 11.01.2008
(51) Int. Cl.: C09B 69/08, C09B 1/26, C09B 1/54, C09B 29/08, C09B 31/062, C07H 15/20

(54) **Disperse dyes soluble in water**

(71) Applicant: Universita' Degli Studi di Firenze, 50121 Firenze (IT); Italvelluti S.p.A., 59013 Montemurlo (IT)
(72) Inventor: Bianchini, Roberto, 50141 Firenze (IT); Catelani, Giorgio, 56021 Cascina (IT); D'Andrea, Felicia, 56011 Calci (IT); Isaad, Jalal, 59100 Prato (IT); Rolla, Massimo, 50058 Signa (IT); Bonaccorsi, Filippo, 57124 Livorno (IT); Nocentini, Tiziano, 51100 Pistoia (IT)
(74) Representative: Cinquantini, Bruno

(57) **Abstract**

The Application describes disperse dyes soluble in water of general formula (I)

D-L-Sₙ (I)

wherein:
D is a disperse dye insoluble in water
L is a linker
S is a sugar
n is comprised between 2 and 4
that are able to dye in an homogeneous way natural fibres and textiles and also textile materials including different fibres, and have high biodegradability through digestion by micro organisms, that found in the molecule itself a useful nourishment for their survival and proliferation; processes for the preparation of the above said dyes and their use are also described.

## Description

### FIELD OF INVENTION

The present application refers to colouring products soluble in water.

### STATE OF THE ART

In the field of dyeing of fabrics many problems arise from the hydrophobic nature of the so called 'disperse dyes'. As it is known these dyes are used fmely dispersed in water, wherein they have an extremely low solubility, for dyeing polyester, acetate, triacetate, polyamide, polyacrylonitrile, modacrylic and polyvinyl chloride fibres. The two main classes of these compounds are the the azo and anthraquinone dyes and can differ considerably in molecular weight.

Since these dyes are not soluble in water, that is the almost exclusive vehicle for dyeing, large amounts of surface agents are added in order to overcome this difficulty which results in high costs both because of the products used (often in very high quantity) and for the huge amount of water requested for washing them out at the end of the process; moreover it must be considered also the problem posed by the risk for the health connected with the use of these products and the costs and difficulties for the treatment of the waste waters.

It should also be considered that each tinctorial plant uses a particular set of dyes, eventually not similar to that used from another company for the same materials. Also, each dye is used only for a specific fabric. This aspect is well represented from the huge number of dyes on the market, around 10,000 and drives two more problems: the cost of the process is kept high, since each dye is not used in large quantities, e and the depuration is difficult, and not efficient, since of course cannot be specific. Also reactive dyes present problems, since, just because they are reactive, they react with the water, so that the losses can arrive to 50% of the total dye, increasing the costs, and worsening the aspect of depuration.

In EP 1462484 it is described how disperse dyes can be made soluble in water by reacting them with a sugar, however, in spite of their usefulness and efficiencies the compounds obtained according to this patent, the described compounds are soluble in water only when the molecular weight of the dye is rather low (less than 250) while when its molecular weight increases they remain insoluble.

It is therefore evident the importance of making available products which allows solubility also of disperse dyes having high molecular weight..

### SUMMARY OF THE INVENTION

The present invention refers to disperse dyes soluble in water, wherein the dye has molecular weight higher than 250, comprising at least two sugar moieties.

### DETAILED DESCRIPTION OF THE INVENTION

The present invention allows to overcome the above said problems making available disperse dyes soluble in water of general formula (I)

D-L-Sₙ (I)

wherein:
D is a disperse dye insoluble in water
L is a linker
S is a sugar
n is comprised between 2 and 4

According to the invention the disperse dye is a commercially available colorant comprising at least an acidic group or a group that can easily transformed into an acidic group as for example CN.

Particular example of disperse dye according to the invention are the polyazo and anthraquinonic dyes.

Example of dyes according to the invention are 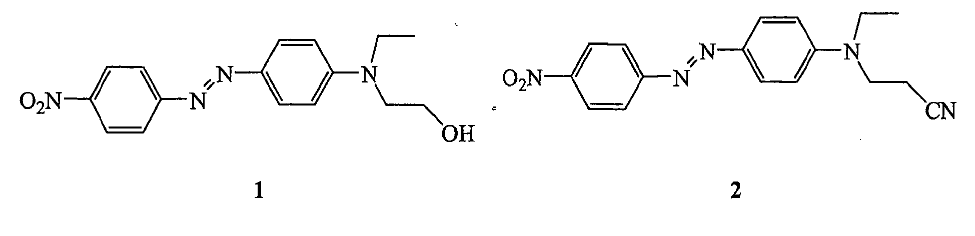 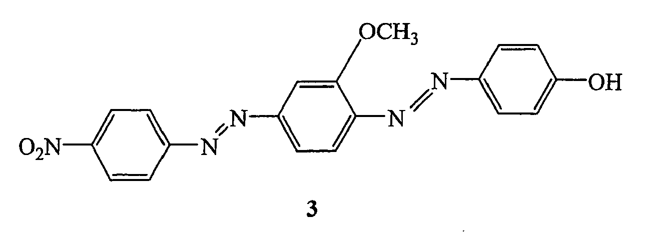 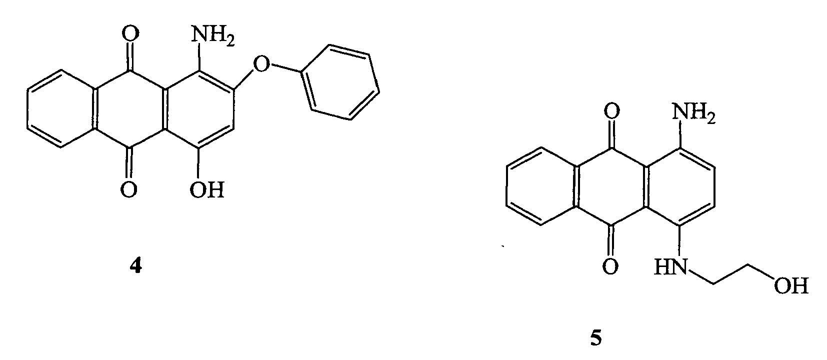 or their known derivatives wherein the aryl-rings are variously substituted.

The linker L according to the invention is a group of formula: 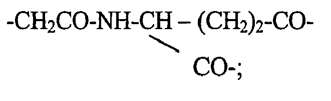 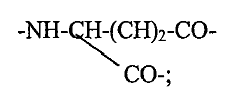 -CO-(CH₂)₂-CO-

The sugar is a mono- o di-saccharide, possibly substituted by an amino group or linked to a second sugar moiety through a linear alkyl chain (CH₂)ₙ- wherein n = 1 - 6.

Examples of sugars according to the invention are: lactose, cellobiose, saccarose and the corresponding amino-derivatives

Lactose (or amino-lactose) are particularly preferred since in this case it is possible to use (as starting product for the synthesis of the final compounds) the lactose present in the wastes of the diary industry therefore contributing to elimination of a potential pollutant.

The process for the preparation of the products according to the invention involves known reaction steps and known products.

According to a particular embodiment of the invention the chosen dye, if necessary derivatized in order to obtain an acidic group, is reacted with the compound constituting the linker, i.e. either glutammic acid or the succinic anhydride, and the so obtained intermediates are reacted with two molecules of amino-sugar or sugar respectively (wherein the free hydroxylic groups except one are protected) to obtain a product in which the dye is bound to one or two sugar or amino-sugar through the linker and fmally the sugar moiety is deprotected to obtain the desired final colouring agent.

If the dye presents more than one acidic group all such groups (a part one) they will be also previously protected using the usual protecting groups as for example.

The synthesis of the amino-sugar is also performed according to known methods and techniques.

The free hydroxylic groups except the one chosen as active bonding site are protected with the usual protecting groups used for this purpose as for example 1 and the protected sugar is modified in order to transform the active bonding site in an excellent exiting group as for example 2 which is thereafter substituted by azido group that is thereafter reduced to amino and the product is finally deprotected to the fmal wanted compound.

According to a preferred embodiment of the invention, the above said deprotection reaction is carried out by acid hydrolysis, for example by a treatment at room temperature with an aqueous solution of trifluoroacetic acid 90%, or a treatment with less aggressive acids at higher temperature, for instance with acetic acid 60-80%. In these conditions the formation in high yield, comprised between 80 and 95% of the required product coming from the total opening of the isopropylidenic protections, has been observed; while the formation of by-products coming from the breaking of the glycosidic bond has not been observed, nor of products coming from partial deprotection.

The example reported herein after will better illustrate in detail the present invention

### Example 1. Synthesis of 2,3:5,6-bis-O-(1-methylethylidene)-4-O-[3,4-O-(1-methylethylidene)-β-D galactopyranosyl]-aldehydo-D-glucose, dimethyl acetal 2

The protection of lactose is carried out following the litterature (see Carbohydrate Research, 298(1), 75-84, 1997) according to the reaction:.

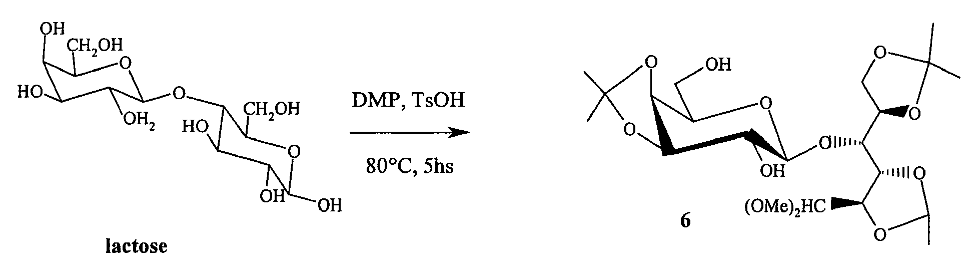

### Example 2- Synthesis of 2,3:5,6-bis-O-(1-methylethylidene)-4-O-[3,4-O-(1-methylethylidene)-6-O-[(4-methylphenyl)sulfonyl]-β-D-galactopyranosyl]-aldehydo-D-glucose, dimethyl acetal 3

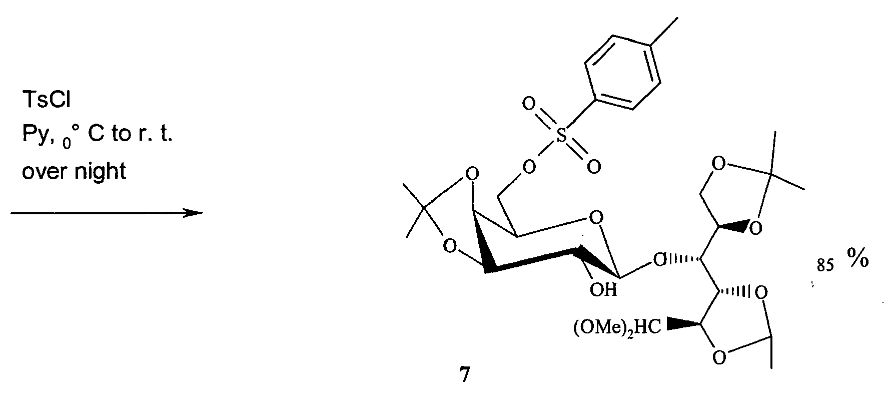

At 0 C°, a solution of **2** (2.00 g, 3.92 mmol) in Pyridine / Acetonitrile (2:1, 15 mL) was added drop wise to a solution of para 4-methylbenzene-1-sulfonyl chloride (TsCl) (0.90 g, 4.70 mmol) in Pyridine / Acetonitrile (2:1, 3 mL). The reaction mixture was stirred at room temperature over night.. Then, water (20 mL) and Ether (20 mL) were added to the crud solution, and the aqueous layer was separated and extracted with Et₂O (2x20 mL). The organic layer was dried over Na₂SO₄ and filtered, the filtrate was concentrated under the reduce pressure and the residue (obtained as a Colourless oil) was purified by Flash Chromatography (stationary phase: silica gel, eluent: ethyl acetate-petroleum ether 3:2) to afford 3 (2.36g, 91%) as a colourless oil [R_{f}0.66 (ethyl acetate/petroleum ether 3:2)].

### Example 3- Synthesis of 2,3:5,6-bis-O-(1-methylethylidene)-4-O-[3,4-O-(1-methylethylidene)-6-O-[(azido)-β-D-galactopyranosyl]-aldehydo-D-glucose, dimethyl acetal 4

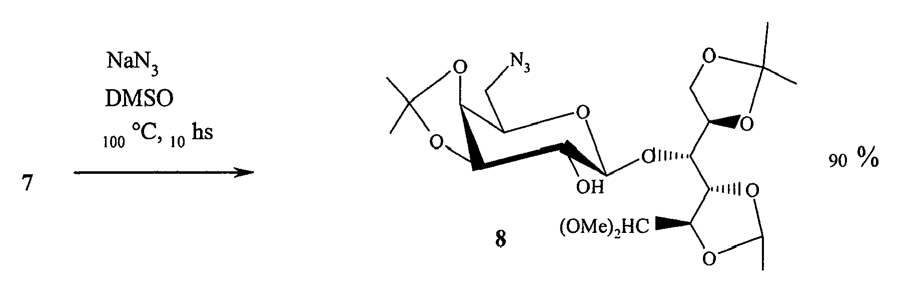

Sodium azide (0.29 g, 4.51 mmol) was added to a solution of **3** (2.00 g, 3.01 mmol) in dimethyl sulfoxide (20mL), and the resulting mixture was heated at 90C° for 20h. Then the mixture was cooled end filtered, the filtrate was diluted with water (50mL) and extracted with chloroform (4x30mL), the organic solution was dried over Na₂SO₄, concentrated under the reduce pressure and the residue (obtained as a colourless oil) was purified by Flash Chromatography (stationary phase: silica gel, eluent: ethyl acetate-petroleum ether 2: 1) to afford **5** (2.36g, 91%) as a colourless oil [R_{f} 0.54 (ethyl acetate/petroleum ether 2:1)].

### Example 4

### Synthesis of 2,3:5,6-bis-O-(1-methylethylidene)-4-O-[3,4-O-(1-methylethylidene)-6-O-[(amino)-β-D-galactopyranosyl]-aldehydo-D-glucose, dimethyl acetal 5

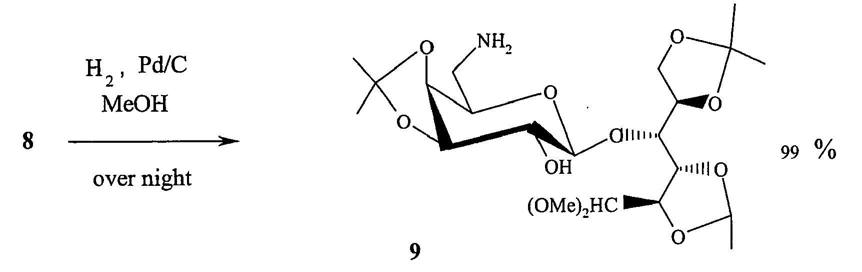

A solution of **4** (2.00 g, 3.75 mmol) in methanol (25mL) was hydrogenated in presence of 10% palladium on carbon (200mg) for 20h at room temperature. Later the crude solution was filtered under celite and the filtrate was concentrated under reduce pressure. The residue was purified by recristallization with ether at 0C° to afford **5** (1.82g, 96%) as a light yellow powder.

### Example5:

### Synthesis of N-Ethyl-N-(2-(acetylacetoxy)ethyl)-4-(4'-nitrophenylazo)aniline 1-L

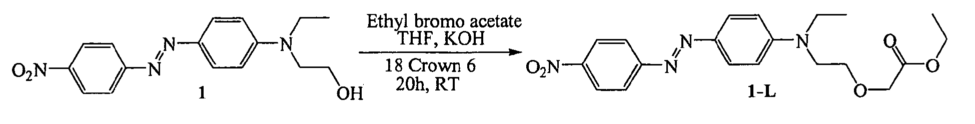

Disperse dye **1** (2g, 6.37mmol) was added to a solution of KOH (1.78g, 31.84mmol) in THF (15mL), and the resulting mixture was stirred et room temperature for 1h. Ethyl bromo acetate (2.44mL, 19.11mmol) and catalytic quantity of 18-crown-6 were added and the resulting solution was stirred at room temperature for 20h, then the solution was filtered, the filtrate was diluted with water (40 mL) and extracted with chloroform (4x30mL). The organic phase was dried with Na₂SO₄ and filtered, the filtrate was concentrated under reduced pressure and the residue (obtained as a red solid) was purified by Flash chromatography (stationary phase: silica gel, eluent: ethyl acetate/petroleum ether 3:7) to afford **1-L** (1.96g, 77%) as a red solid; (R_{f}0.66, ethyl acetate/petroleum ether 3:7).

### Example 6:

### Synthesis of N-Ethyl-N-(2-(2'-hydrocarboxy)ethyloxy)-4-(4-nitrophenylazo)aniline 1-LS

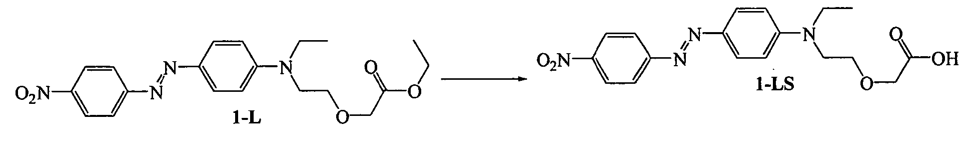

KOH (0.55g, 9.8mmol) was added to a solution of **1-L** (1.96g, 4.9mmol) in THF/H₂O (1/1, 16mL), and the resulting mixture was stirred at room temperature for 2h. The TLC (ethyl acetate/petroleum ether 3:7) indicate the disappearance of the starting product (*Rf*, 0.66) and the formation of one major spot (*Rf*, 0.1). The solution was diluted with 25mL of water and extracted with chloroform (3x20mL) of. The aqueous solution was acidified with HCl 1N to PH=2 and extracted with chloroform (30mL). The organic solution was dried over Na₂SO₄ and filtered, the solvent was removed under reducede pressure to afford **1-LS** (1.54g, 98%) as a red solid. D1-LS is soluble in water at pH>7.

### Example 7:

### Synthesis of N-Ethyl-N-(2-(2'-carboxyglutamic(diethyl ester)-1'-amido)ethyloxy)-4-(4-nitrophenylazo)aniline (1-GL)

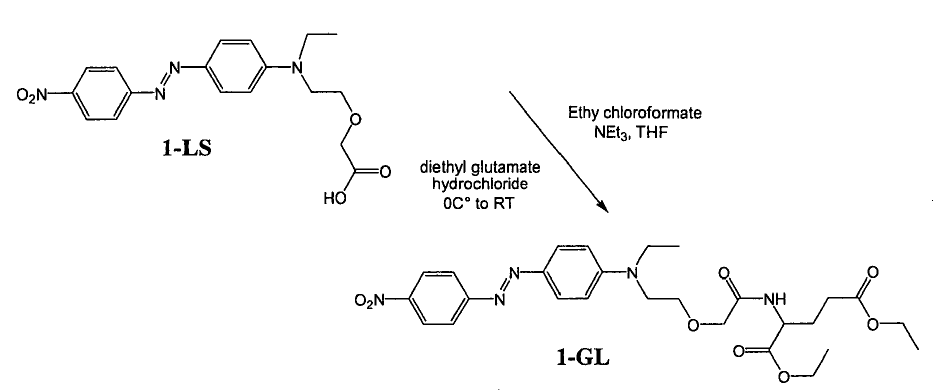

Triethylamine (2mL ,14.4mmol) was added to a solution of **1-LS** (1.78g, 4.8mmol) in anhydrous THF (15 mL), and the mixture was stirred under N₂ at room temperature for 5 min. The resulting solution was cooled to 0° C, ethyl-chloro formate (1.36mL ,14.4mmol) was added, and the mixture was stirred at 0° C for 30 min. At this time TLC (ethyl acetate/petroleum ether 2:1) indicated the formation of the activated intermediate (*Rf*, 0.82) and the disappearance of the starting acid (*Rf*, 0.1). Diethyl-L-glutamate hydrochloride (1.15g, 4.8mmol) was added to the reaction mixture followed immediately by triethylamine (0.67mL, 4.8mmol). The reaction mixture was allowed to warm slowly to room temperature and stirred under N₂ for 18 h. The reaction mixture was then subjected to another of activation and coupling cycle using half the quantities listed above. After additional 24 h of reacting,. TLC showed the formation of one major spot at (*Rf* ,0.35 - ethyl acetate/petroleum ether 2:1). The reaction mixture was evaporated to dryness under reduced pressure. The residue was dissolved in a minimum amount of dichloromethane and purified by chromatography on a silica gel column with (ethyl acetate/petroleum ether 2:1) as eluent. The desired fractions of (FCC) were pooled and evaporated to dryness to afford **1-GL** (2.42g, 88%) as a red crystal; [*R_{f}*, 0.35, ethyl acetate/petroleum ether 2:1].

### Example 8:

### Synthesis of N-Ethyl-N-(2-(2'-carboxyglutamic acid-1'-amido)ethyloxy)-4-(4-nitrophenylazo)aniline (1-GLS)

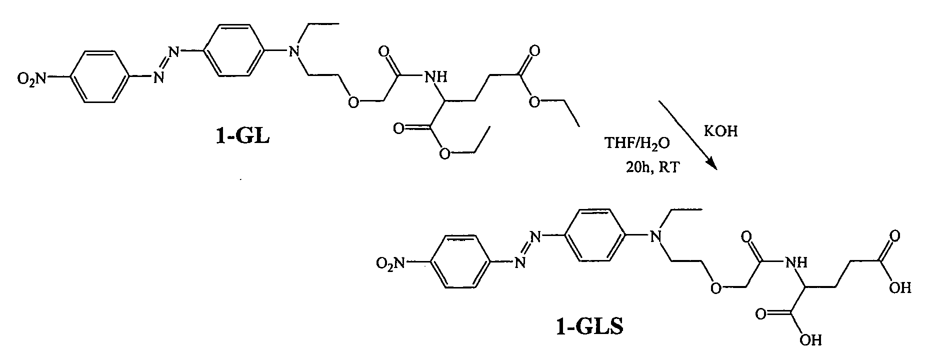

KOH (0.66, 11.76mmol) was added to a solution of the diester **1-GL** (2.42g, 3.92mmol) in H₂O/THF: (1/1: 20 mL) and the mixture was stirred at room temperature for 20 h. TLC showed the disappearance of the starting material (*Rf*, 0.35 - ethyl acetate/petroleum ether 2:1) and formation of one major spot at the origin. The reaction mixture was evaporated to dryness under reduced pressure and the residue dissolved in water (15 mL). The resulting solution was cooled in an ice
bath and the pH adjusted to 2 with dropwise addition of 1 N HCl. The resulting suspension was extracted with 20mL ethyl acetate. The organic solution was dried over Na₂SO₄, the solvent was removed under reduced pressure to afford **1-GLS** (1.92g, 98%) as a red crystal.

### Example 9:

### Synthesis of N-Ethyl-N-(2-(2'-carboxyglutamic-bis{(2,3:5,6-bis-O-(1-methylethylidene)-4-O-[3,4-O-(1-methylethylidene)-6'-O-[(amidoyl)-β-D-galactopyranosyl]-aldehydo-D-glucose-dimethyl acetal)}-1'-amido)ethyloxy)-4-(4-nitrophenyl-azo)aniline 1-BISLP

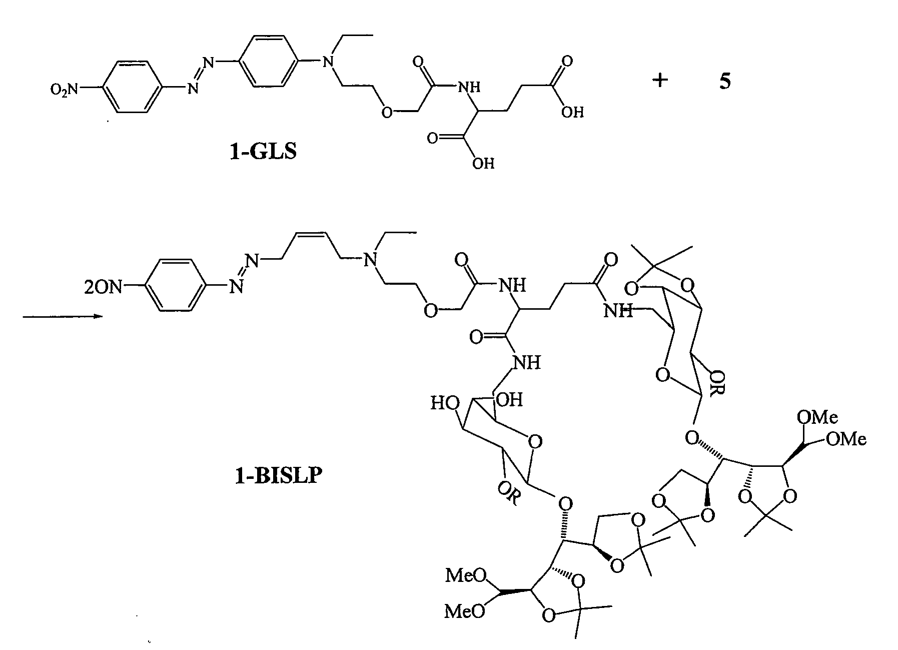

N-methyl morpholine (1.28mL ,9.2mmol) was added to a solution of **1-GLS** (1.92g, 3.84mmol) in THF (15 mL), and the mixture stirred at room temperature for 5 min. The resulting solution was cooled to 0° C, DMTMM (Dimethoxymethyl morpholinium, M. Kunishima, C. Kawachi, F. Iwasaki, K. Terao, and S. Tani Tetr. Lett. 1999, 40, 5327-5330) (2.60g ,9.2mmol) was added, and the mixture was stirred at room temperature for 2h. At this time TLC (dichloromethane/methanol: 10:0.4) indicated the formation of the activated intermediate (*Rf*. 0.79) and the disappearance of the starting acid (*Rf*. 0.1). Then amino lactose **5** (3.90g, 7.68mmol) was added and the reaction mixture was slowly allowed to warm to room temperature and stirred for 24 h. TLC showed the formation of one major spot at (*Rf*. 0.35- dichloromethane/methanol: 10:0.4). The reaction mixture was evaporated to dryness under reduced pressure. The residue was dissolved in a chloroform (20mL) and washed with solution of HCl 5% (20mL) and water (3x20mL). The organic solution was dried over Na₂SO₄ and filtered. The filtrate was concentrated under reduced pressure and the residue (obtained as a red solid) was purified by flash chromatography (dichloromethane/methanol: 10:0.4) to afford **1-BISLP** (4.99g, 88%) as a red crystal; (*R_{f},* 0.35- dichloromethane/methanol: 10:0.4)

### Example 10:

### Synthesis of N-Ethyl-N-(2-(2'-carboxyglutamic bis[6'amidoyl-lactose]-1'-amido)ethyloxy)-4-(4-nitrophenyl-azo)aniline 1-BISL

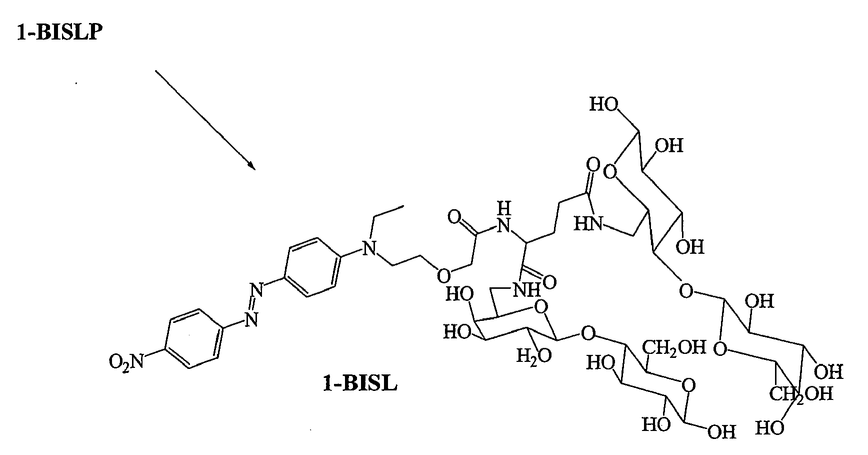

A solution of **1-BISLP** (2.00g, 1.35 mmol) in 90% aqueous CF₃COOH (15 mL) was stirred at room temperature over night. The TLC (dichloromethane/methanol: 10:0.4) indicate that the starting material **1-BISLP** (Rf. 0.35) was completely reacted, and the formation of the deprotected compound **1-BISL** was quantitative (Rf. 0.1). The violet solution was repeatedly co-evaporated with toluene (5 x 25 mL) at reduced pressure to give the final product **1-BISL** (1.58g, 99%) as a red powder.

### Example11

### Synthesis of N-Ethyl-N-(propionic)-4-(4'-nitrophenylazo)aniline acid (2-H)

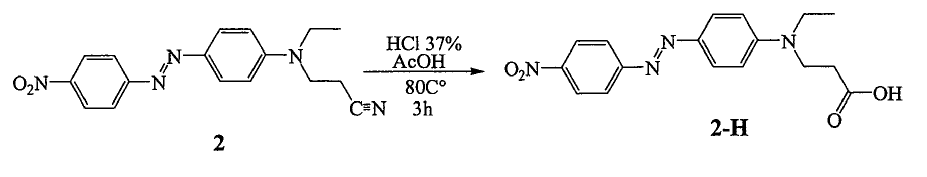

A solution of **2** (2.00g, 6.19 mmol) in acetic acid/ HCl 37% (2/1, 18mL) was heated at 80C° for 3h. The TLC (ethyl acetate) indicated that the starting material **2** (*Rf*. 0.75) was completely reacted and the formation of the corresponding acid **2-H** (*Rf*. 0.1). Then, the reaction mixture was evaporated to dryness under reduced pressure. The residue was dissolved in a chloroform (20mL) and washed with a saturated solution of NaOH (30mL). The aqueous solution was cooled in an ice bath and the pH adjusted to 2 with dropwise addition of HCl solution 1N . The resulting suspension was extracted with ethyl acetate (20mL), the organic solution was dried over Na₂SO₄, the solvent was removed under reduced pressure to afford **2-H** (1.97g, 98%) as a red crystal.

### Example 12

### Synthesis of N-ethyl, N-(3-carboxyamido-diethyl-1'-glutammate)-4-nitrophenyl)phenylazo)aniline

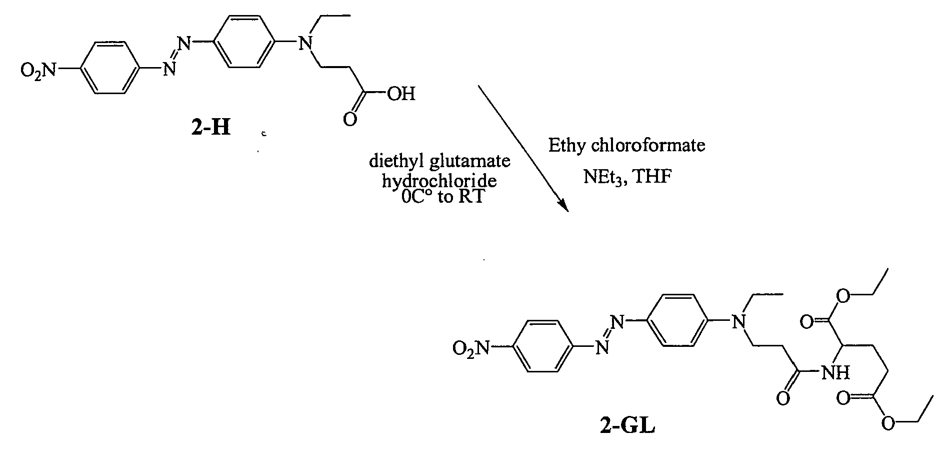

Triethylamine (1.93mL 13.84mmol) was added to a solution of **2-H** (1.5g, 4.61mmol) in anhydrous THF (15 mL), and the mixture stirred under N₂ at room temperature for 5 min. The resulting solution was cooled to 0° C, ethyl-chloro formate (1.33mL ,13.84mmol) was also added, and the mixture was stirred at 0° C for 30 min. At this time TLC (ethyl acetate/petroleum ether 4:10) indicated the formation of the activated intermediate (*Rf*, 0.79) and the disappearance of the starting acid (*Rf*, 0.1). Diethyl-L-glutamate hydrochloride (1.11g, 4.61mmol) was added to the reaction mixture followed immediately by triethylamine (0.66mL, 4.61mmol). The reaction mixture was slowly allowed to warm to room temperature and stirred under N₂ for 18 h. The reaction mixture was then subj ected to another cycle of activation and coupling using half the quantities listed above. The reaction mixture was slowly allowed to warm to room temperature and stirred under N₂ for an additional 24 h. TLC showed the formation of one major spot at (*Rf* , 0.35- ethyl acetate/petroleum ether 4:10). The reaction mixture was evaporated to dryness under reduced pressure. The residue was dissolved in a minimum amount of dichloromethane and purified by flash chromatography on a silica gel column with (ethyl acetate/petroleum ether 4:10) as eluent. The desired fractions of (TLC) were pooled and evaporated to dryness to afford **2-GL** (2.21g, 91%) as a red crystal; (*R_{f}*, 0.35- ethyl acetate/petroleum ether 4: 10).

### Example 13:

### Synthesis of N-ethyl, N-(3-carboxyamido-glutammic acid)-4-nitrophenyl)phenylazo)aniline 2-GLS

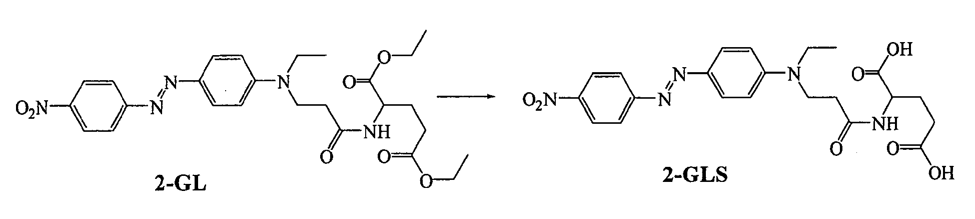

KOH (0.64, 11.38mmol) was added to a solution of the diester **D2-GL** (2g, 3.79mmol) in H₂O/THF: (1/1: 20 mL) and the mixture was stirred at room temperature for 20 h. TLC showed the disappearance of the starting material (*Rf*, 0.85- ethyl acetate) and formation of one major spot at the origin. The reaction mixture was evaporated to dryness under reduced pressure and the residue dissolved in water (20 mL). The resulting solution was cooled in an ice bath and the pH adjusted to 2 with dropwise addition of HCl solution 1 N. The resulting suspension was extracted with 20mL chloroform, the organic solution was dried over Na₂SO₄, the solvent was removed under reduced pressure to afford **D2-GLS** (1.77g, 98%) as a red powder.

### Example14

### Synthesis of N-ethyl, N-(3-carboxyamido-bis{2,3:5,6-bis-O-(1-methylethylidene)-4-O-[3,4-O-(1-methylethylidene)-6-O-[(amidoyl)-β-D-galactopyranosyl]-aldehydo-D-glucose-dimethyl acetal}-glutammic)-4-nitrophenyl)phenylazo)aniline 2-BISLP

N-Methyl morpholine (1.06mL ,9.71mmol) was added to a solution of **2-GLS** (1.50g, 3.23mmol) in THF (15 mL), and the mixture stirred at room temperature for 5 min. The resulting solution was cooled to 0° C, DMTMM (2.67g ,9.69mmol) was added, and the mixture was stirred at room temperature for 2h. At this time TLC (dichloromethane/methanol: 10:0.35) indicated the formation of the activated intermediate (*Rf*. 0.81) and the disappearance of the starting acid (*Rf*. 0.1). amino lactose **5** (3.3g, 6.46mmol) was added and the reaction mixture was stirred at room temperature for 24 h. TLC showed the formation of one major spot at (*Rf*. 0.33, Dichloromethane/Methanol: 10:0.35). The reaction mixture was evaporated to dryness under reduced pressure. The residue was dissolved in a chloroform (20mL) and washed with solution of HCl 5% (20mL) and water (3x20mL). The organic solution was dried over Na₂SO₄ and filtered, the filtrate was concentrated under reduced pressure and the residue (obtained as a red solid) was purified by Flash chromatography (dichloromethane/methanol: 10:0.35) to afford **2-BISLP** (4.07g, 87%) as a red crystal; (R_{f}0.33, dichloromethane/methanol: 10:0.35).

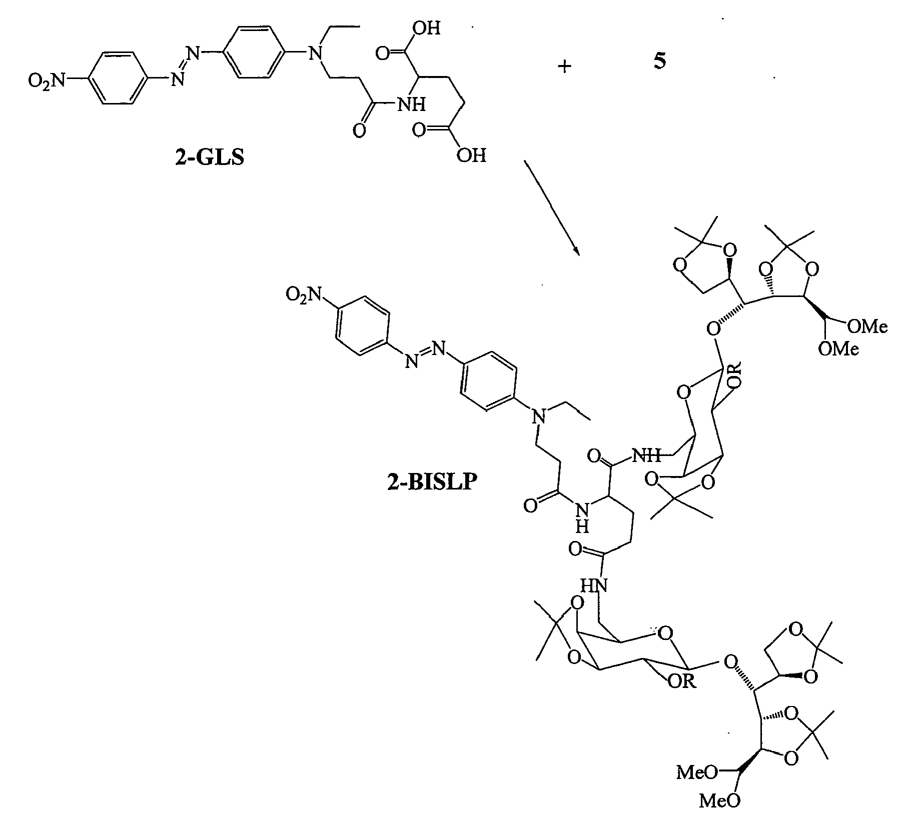

### Example15

### Synthesis of N-ethyl, N-(3-carboxyamido-bis(6'amidoyl-lactose)-1'-glutammate)-4-nitrophenyl)phenylazo)aniline 2-BISL

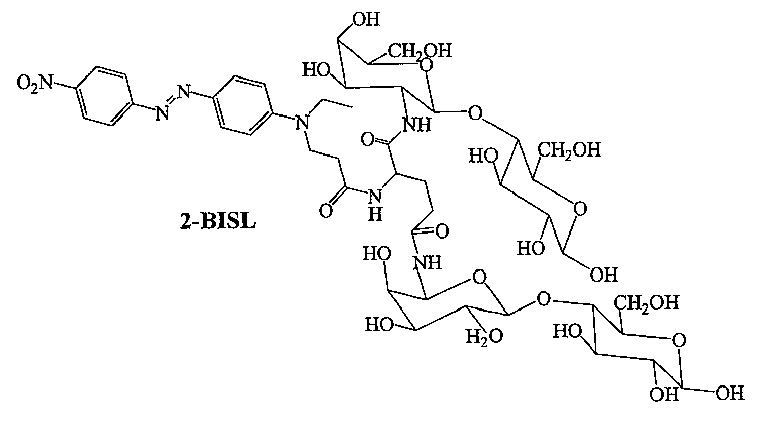

A solution of **2-BISLP** (2.00g, 1.38 mmol) in 90% aqueous CF₃COOH (15 mL) was stirred at room temperature over night. The TLC (dichloromethane/methanol: 10:0.35) indicated that the starting material (Rf. 0.33) was completely reacted and the formation of the deprotected, while the new compound **2-BISL** was formed (Rf. 0.1). The violet solution was evaporated to dryness and repeatedly co-evaporated with toluene (5 x 25 mL) at reduced pressure to give the final product **2-BISL** (1.57g, 99%) as a red powder.

### Example16:

### Synthesis ofp-phenylazo[2'-methoxy-4'(p-nitrophenylazo)]phenoxy-(2-(acetylacetoxy)ethyl) 3-L

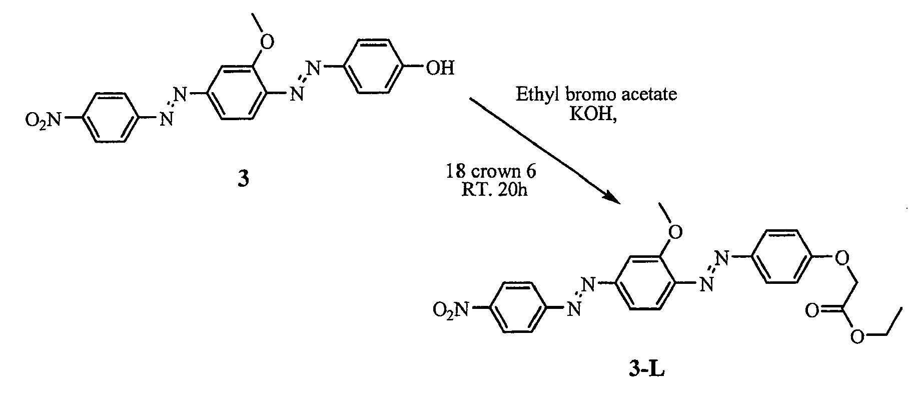

Disperse dye **3** (1.5g, 3.97mmol) was added to a solution of KOH (1.12g, 19.89mmol) in THF (15mL), and the resulting mixture was stirred et room temperature for 1.5h. Then ethyl bromo acetate (1.32mL, 11.91mmol) and catalytic quantity of 18-crown-6 were added and the resulting solution was stirred at room temperature for 20h. Then the reaction mixture was filtered, the filtrate was diluted with water (40 mL) and the aqueous solution was transferred in a separator funnel and extracted with chloroform (4x30mL). The organic phase was dried over Na₂SO₄ and filtered, the filtrate was concentrated under reduced pressure and the residue (obtained as a red solid) was purified by Flash chromatography (stationary phase: silica gel, eluent: ethyl acetate/petroleum ether 4:9) to afford **3-L** (1.67g, 91%) as a orange solid; (R_{f}0.75, ethyl acetate/petroleum ether: 4/9).

### Example 17

### Synthesis of 2-{p-phenylazo[2'-methoxy-4'(p-nitrophenylazo)]phenoxy}-acetic acid 3-LS

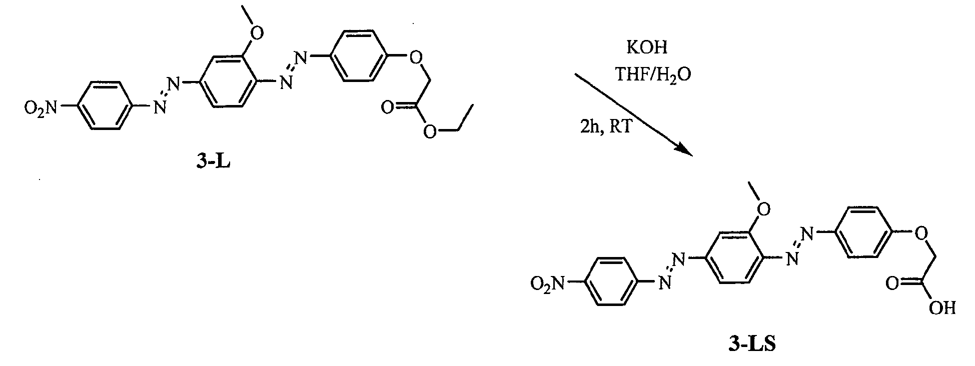

KOH (0.54g, 9.69mmol) was added to a solution **of 3-L** (1.50g, 3.23mmol) in THF/H₂O (1/1, 16mL), and the resulting mixture was stirred et room temperature for 2h. the TLC (ethyl acetate) indicate the disappearance of the starting product **3-L** (*R_{f}* 0.86) and the formation of one major spot (*Rf*, 0.1). The solution was diluted with 25mL of water and extracted tree time with chloroform (3x20mL) of. The aqueous solution was acidified with HCl solution 1N to PH=2 and extracted with 30mL of ethyl acetate. The organic solution was dried over Na₂SO₄ and filtered, the solvent was removed under reduced pressure to afford **3-LS** (1.37g, 98%) as a red solid.

### Example18:

### Synthesis of 2-{p-phenylazo[2'-methoxy-4'(p-nitrophenylazo)]phenoxy}-acetyl-(diethyl ester)-1'-glutamic amide 3-GL

Triethylamine (1.64mL ,11.73mmol) was added to a solution **of 3-LS** (1.70g, 3.91mmol) in anhydrous THF (15 mL), and the mixture stirred under N₂ at room temperature for 5 min. The 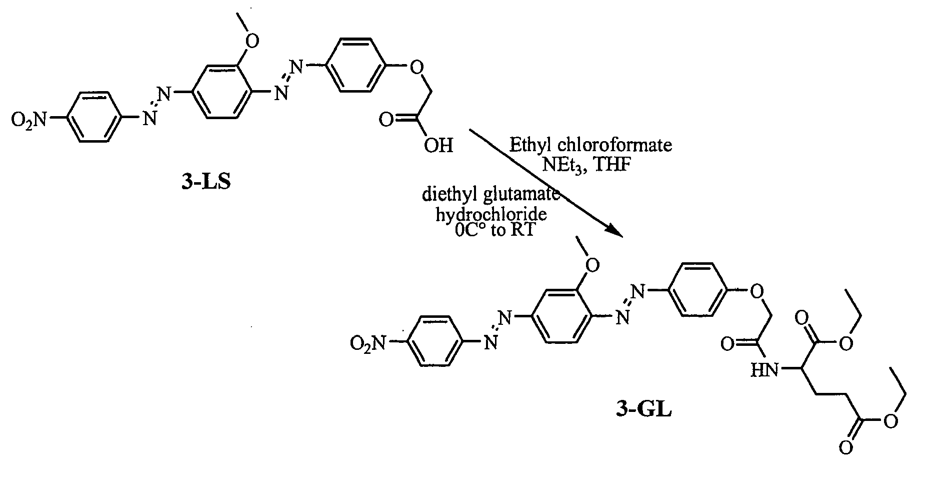 resulting solution was cooled to 0° C, ethyl-chloro formate (1.13mL ,11.73mmol) was added, and the mixture was stirred at 0° C for 30 min. At this time TLC (ethyl acetate/petroleum ether 3:1) indicated the formation of the activated intermediate (*Rf*,0.72) and the disappearance of the starting acid (*Rf*,0.1). Diethyl-L-glutamate hydrochloride (0.94g, 3.91mmol) was added to the reaction mixture followed immediately by triethylamine (0.54mL, 3.91mmol). The reaction mixture was stirred at room temperature under N₂ for 18 h. The reaction mixture was then subjected to another cycle of activation and coupling using half the quantities listed above. The reaction mixture was slowly allowed to warm to room temperature and stirred under N₂ for an additional 24 h. TLC showed the formation of one major spot at (*Rf* ,0.44) (ethyl acetate/petroleum ether 3:1).

The reaction mixture was evaporated to dryness under reduced pressure. The residue was dissolved in a minimum amount of Dichloromethane and purified by chromatography on a silica gel column with (ethyl acetate/petroleum ether 3:1) as eluent to afford **3c** (2.18g, 90%) as a red crystal; [*R_{f}*, 0.44, ethyl acetate/petroleum ether 3:1].

### Example 19

### Synthesis of 2- {p-phenylazo[2'-methoxy-4'(p-nitrophenylazo)]phenoxy}-acetyl-1'-glutamic acid 3-GLS

KOH (0.54, 9.67mmol) to a solution of the diester **3-GL** (2g, 3.22mmol) in H₂O/THF: (1/1: 20 mL) was added and the mixture was stirred at room temperature for 20 h. TLC (ethyl acetate) showed the disappearance of the starting material (*Rf*, 0.83.) and formation of one major spot at the origin. The reaction mixture was evaporated to dryness under reduced pressure and the residue dissolved in water (20 mL). The resulting solution was cooled in an ice bath and the pH adjusted to 2 with dropwise addition of HCl solution 1 N. The resulting suspension was extracted with 20mL chloroform, the organic solution was dried over Na₂SO₄, the solvent was removed under reduced pressure to afford **3-GLS** (1.78g, 99%) as a black solid. D3GLS is soluble in water at pH>7.

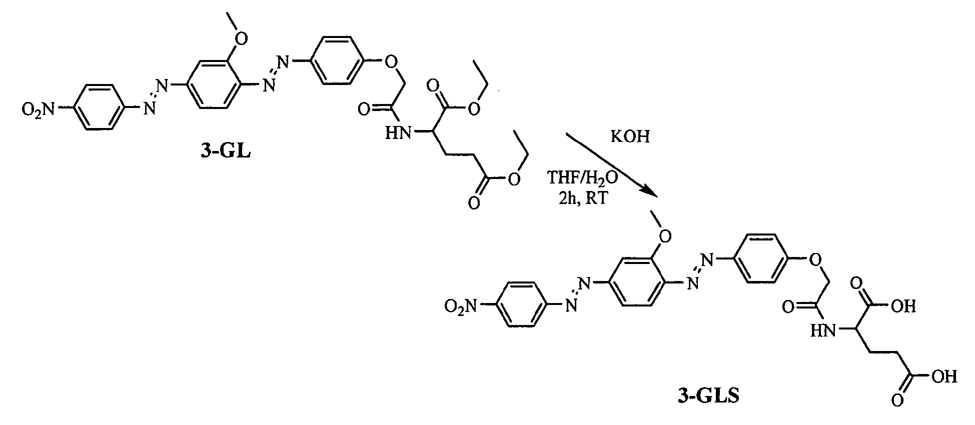

### Example 20:

### Synthesis of 2-{p-phenylazo[2'-methoxy-4'(p-nitrophenylazo)]phenoxy}-acetyl-1'-glutamic-bis {2,3:5,6-bis-O-(1-methylethylidene)-4-O-[3,4-O-(1-methylethylidene)-6-O-[(amido)-β-D-galactopyranosyl]-aldehydo-D-glucose-dimethyl acetal}amide 3-BISLP

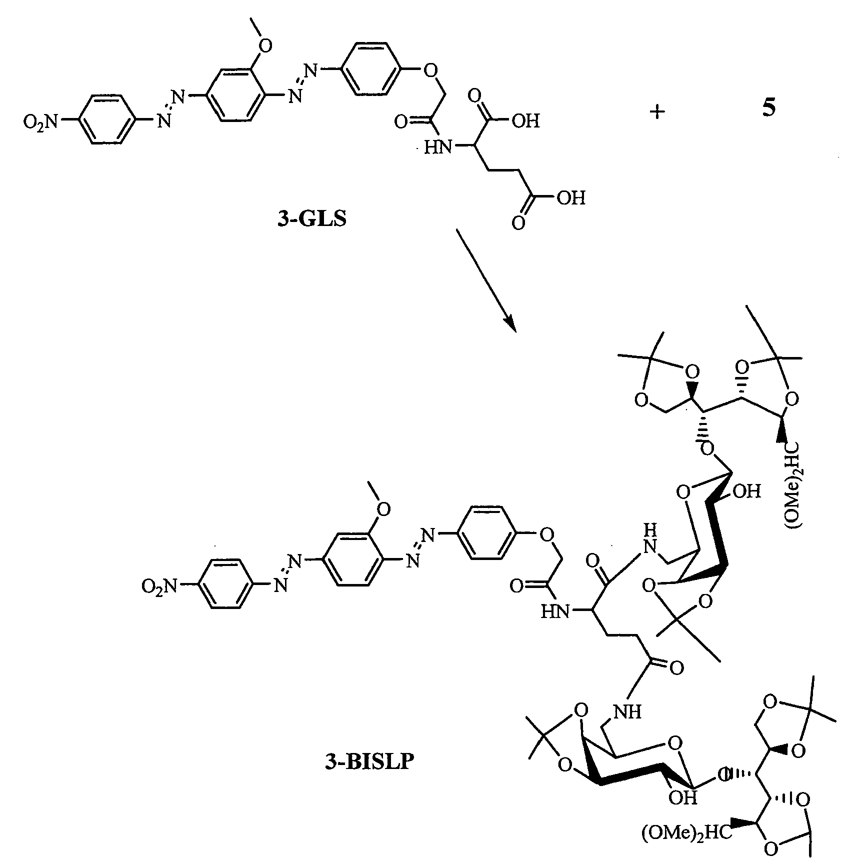

N-methyl morpholine (0.88mL ,7.98mmol) was added to a solution of **3-GLS** (1.50g, 2.66mmol) in THF (15 mL), and the mixture stirred at room temperature for 5 min. The resulting solution was cooled to 0° C, DMTMM (2.20g ,7.98mmol) was added, and the mixture was again left to stir at room temperature for 2h. Then TLC (dichloromethane/methanol: 10:0.5) indicated the formation of the activated intermediate (*Rf*. 0.77) and the disappearance of the starting acid (*Rf*. 0.1). Amino lactose **5** (2.70g, 5.32mmol) was added and the reaction mixture was stirred at room temperature for 24 h. TLC showed the formation of one major spot at (*Rf*. 0.39, dichloromethane/methanol: 10:0.5). The reaction mixture was evaporated to dryness under reduced pressure. The residue was dissolved in a chloroform (20mL) and washed with solution of HCl 5% (20mL) and water (3x20mL). The organic solution was dried over Na₂SO₄ and filtered, the filtrate was concentrated under reduced pressure and the residue (obtained as a orange solid) was purified by Flash chromatography to afford **3-BISLP** (3.73g, 91%) as a red crystal; (*R_{f}*, 0.39, dichloromethane/methanol: 10:0.5).

### Example 21

### Synthesis of 2-{p-phenylazo[2'-methoxy4'(p-nitrophenylazo)]phenoxy}-acetyl-1'-glutamic-bis (6'amido-lactose)amide 3-BISL

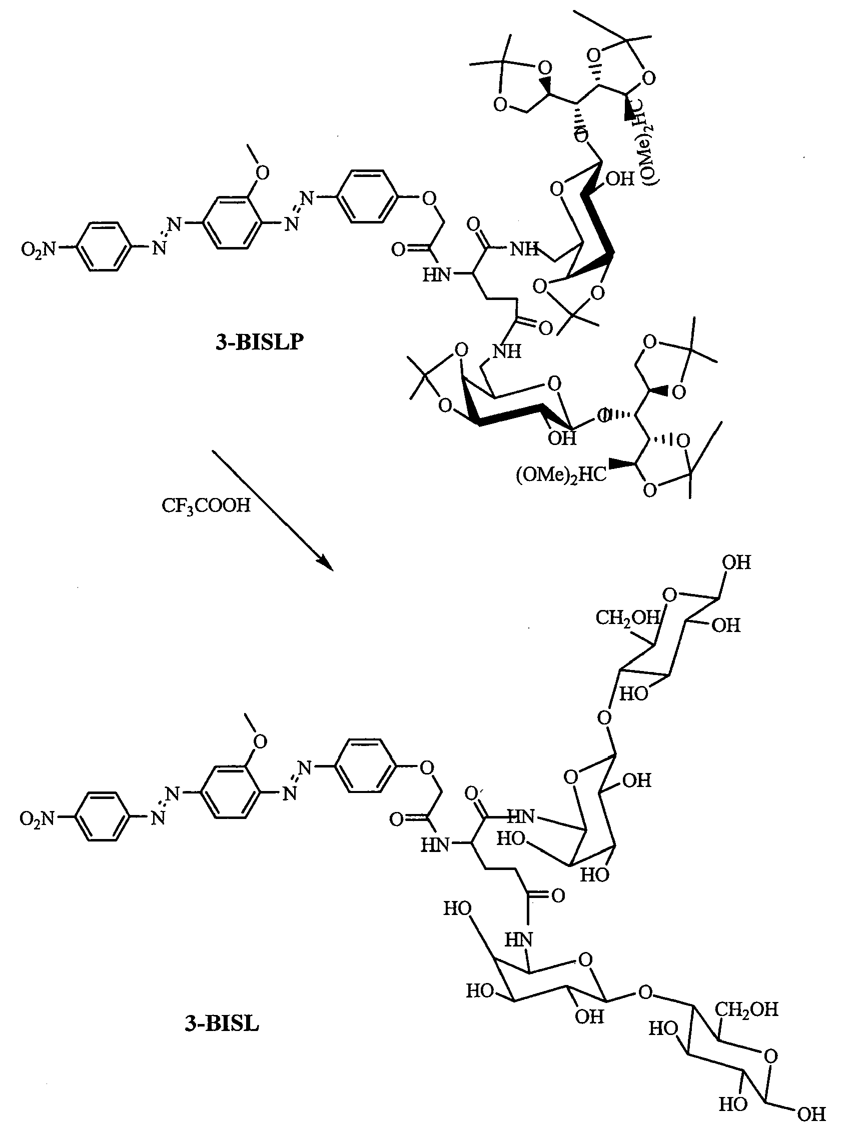

A solution of **3-BISLP** (2.00g, 1.29 mmol) in 90% aqueous CF₃COOH (15 mL) was stirred at room temperature over night. The TLC (dichloromethane/methanol: 10:0.5) indicate that the starting material (Rf. 0.33) was completely reacted and the formation of the deprotected compound **3-BISL** (Rf. 0.1) had taken place. The violet solution was evaporated to dryness and repeatedly co-evaporated with toluene (5 x 25 mL) at reduced pressure to give the final product **3-BISL**(1.59g, 99%) as a red powder.

### Example 22

### Synthesis of 2-(1-amino-2-phenoxy-4-oxy)acetylacetate 4-L

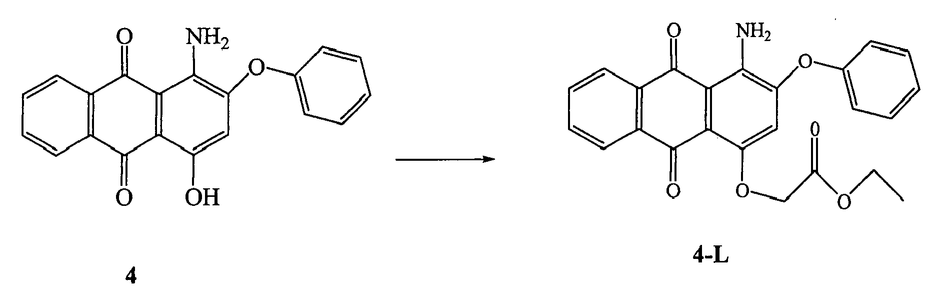

Disperse dye **D4** was added to a solution of K₂CO₃ (2.51g, 18.12mmol) in acetone (25mL), (2.0g, 6.04 mmol) and the resulting mixture was stirred at room temperature for 1.5h. Then ethyl bromo acetate (1.32mL, 11.91mmol) and catalytic quantity of 18-crown-6 were added and the resulting solution was refluxed for 20h. At the end of the reaction, the reaction mixture was filtered, the filtrate was diluted with water (40 mL) and the aqueous solution was extracted with chloroform (4x30mL). Then, the organic phase was dried over Na₂SO₄ and filtered, the filtrate was concentrated under reduced pressure and the residue (obtained as a red solid) was purified by Flash chromatography (stationary phase: silica gel, eluent: ethyl acetate/petroleum ether 2:3) to afford **4-L** (1.61g, 64%) as a red solid; (R_{f} 0.56, ethyl acetate/petroleum ether: 2/3).

### Example 23

### Synthesis of 2-(1-amino-2-phenoxy-4-oxy)acetic acid 4-LS

KOH (0.30g, 5.39mmol) was added to a solution of **4-L** (1.50g, 3.59mmol) in THF/H₂O (1/1, 16mL), and the resulting mixture was stirred at room temperature for 2h. the TLC (ethyl acetate) indicate the disappearance of the starting product **4-L** (*R_{f}* 0.82) and the formation of one major spot (*Rf*, 0.1). The solution was diluted with 25mL of water and extracted tree time with chloroform (3x20mL) of. The aqueous solution was acidified with HCl solution 1N to PH=2 and extracted with 30mL of ethyl acetate. The organic solution was dried over Na₂SO₄ and filtered, the solvent was removed under reduce pressure to afford **4-LS** (1.36g, 98%) as a red solid.

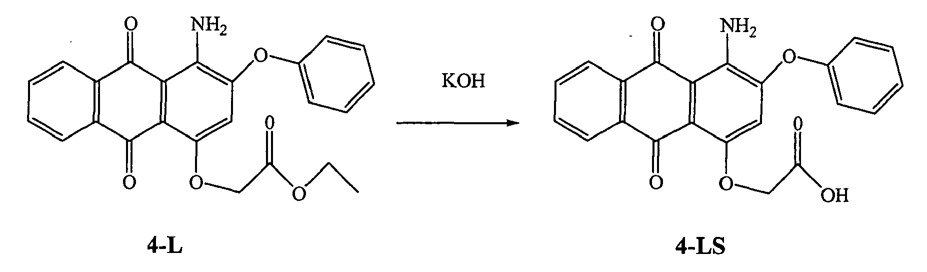

### Example 24

### Synthesis of (diethyl ester)-1'-glutamic[2-(1-amino-2-phenoxy-4-oxy)]acetoyl amide 4-GL

Triethylamine (1.28mL ,9.25mmol) was added to a solution of **4-LS** (1.20g, 3.08mmol) in anhydrous THF (15 mL), and the mixture stirred under N₂ at room temperature for 5 min. The resulting solution was cooled to 0° C, ethyl-chloro formate (0.89mL ,9.25mmol) was added, then the mixture was stirred at 0° C for 30 min. At this time TLC (ethyl acetate/petroleum ether 1:2) indicated the formation of the activated intermediate (*Rf*,0.67) and the disappearance of the starting acid (*Rf*,0.1). Diethyl-L-glutamate hydrochloride (0.75g, 3.08mmol) was added to the reaction mixture followed immediately by triethylamine (0.42mL, 3.08mmol). The reaction mixture was left under stirring at room temperature under N₂ for 18 h. The reaction mixture was then subjected to another cycle of activation and coupling using half the quantities listed above. The reaction mixture was slowly allowed to warm to room temperature and stirred under N₂ for an additional 24 h. TLC showed the formation of one major spot at (*Rf* ,0.38) (ethyl acetate/petroleum ether 1:2). The reaction mixture was evaporated to dryness under reduced pressure. The residue was dissolved in a minimum amount of Dichloromethane and purified by chromatography on a silica gel column with (ethyl acetate/petroleum ether 1:2) as eluent to afford **4-GL** (1.56g, 88%) as a red crystal; [*R_{f}*, 0.38, ethyl acetate/petroleum ether 1:2].

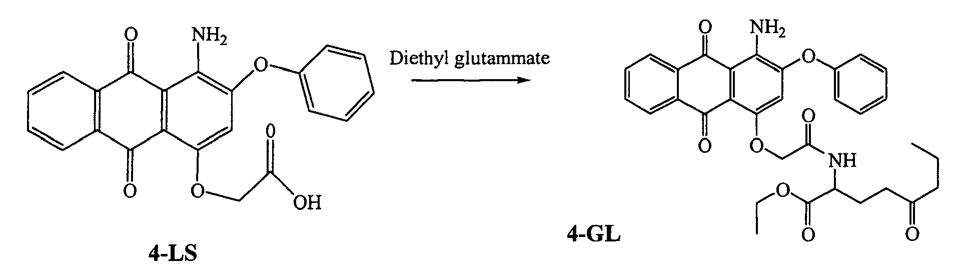

### Example 25

### Synthesis of 1'-glutamic[2-(1-amino-2-phenoxy-4-oxy)]acetoyl amide 4-GLS

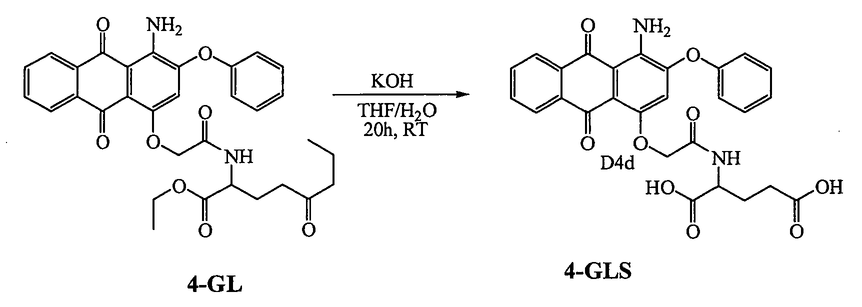

KOH (0.44, 7.83mmol) was added to a solution of the diester **4-GLS** (1.5g, 2.61mmol) in H₂O/THF: (1/1: 20 mL) and the mixture was stirred at room temperature for 20 h. TLC (ethyl acetate) showed the disappearance of the starting material (*Rf*, 0.77.) and formation of one major spot at the origin. The reaction mixture was evaporated to dryness under reduced pressure and the residue dissolved in water (20 mL). The resulting solution was cooled in an ice bath and the pH adjusted to 2 with dropwise addition of HCl solution 1 N. The suspension was extracted with 20mL chloroform, the organic solution was dried over Na₂SO₄, the solvent was removed under the reduce pressure to afford **4-GLS** (1.33g, 98%) as a red solid.

### Example 26

### Synthesis of bis{(2,3:5,6-bis-O-(1-methylethylidene)-4-O-[3,4-O-(1-methylethylidene)-6'-O-[(amidoyl)-β-D-galactopyranosyl]-aldehydo-D-glucose-dimethyl acetal)}-1'-glutamic[2-(1-amino-2-phenoxy-4-oxy)]acetyl amide 4-BISLP

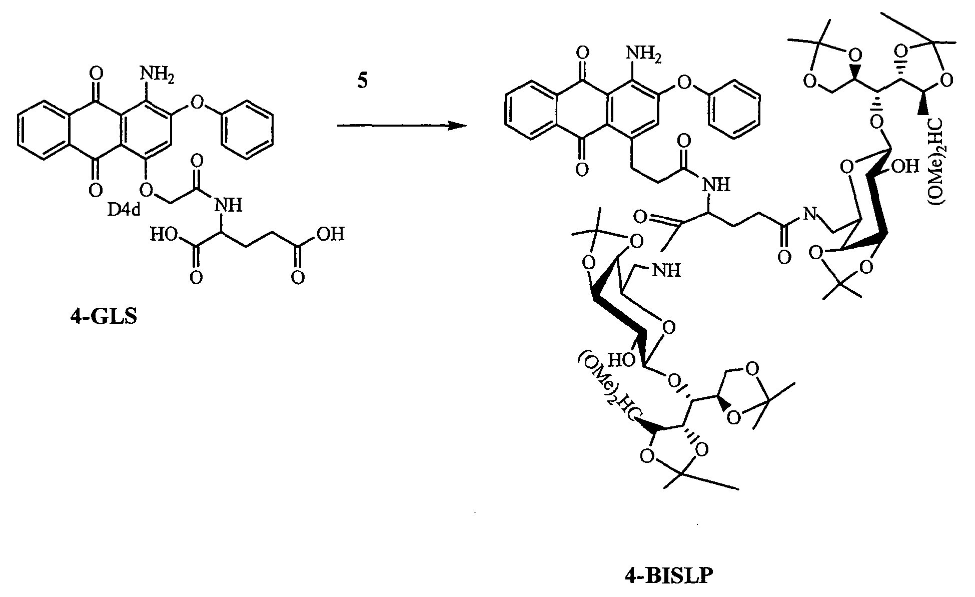

N-Methyl morpholine (0.95mL ,8.68mmol) was added to a solution of **4-GLS** (1.50g, 2.89mmol) in THF (15 mL), and the mixture stirred at room temperature for 5 min. The resulting solution was cooled to 0° C, DMTMM (2.40g ,8.68mmol) was added, and the mixture was again stirred at room temperature for 2h. At this time TLC (dichloromethane/methanol: 10:0.7) indicated the formation of the activated intermediate (*Rf*. 0.77) and the disappearance of the starting acid (*Rf*. 0.1). Amino lactose **5** (2.95g, 5.78mmol) was added, and the reaction mixture was left under stirring at room temperature for 24 h. TLC showed the formation of one major spot at (*Rf*. 0.35, dichloromethane/methanol: 10:0.7). The reaction mixture was evaporated to dryness under reduced pressure. The residue was dissolved in a chloroform (20mL) and washed with solution of HCl 5% (20mL) and water (3x20mL). The organic solution was dried over Na₂SO₄ and filtered, the filtrate was concentrated under the reduce pressure and the residue (obtained as a orange solid) was purified by Flash chromatography (dichloromethane/methanol: 10:0. 7) to afford **4-BISLP** (3.63g, 84%) as a red crystal; (*R_{f}*, 0.35, Dichloromethane/Methanol: 10:0.7).

### Example 27

### Synthesis of bis-[6'-aminolactosyl]-1'-glutamic[2-(1-amino-2-phenoxy-4-oxy)]acetyl amide 4-BISL

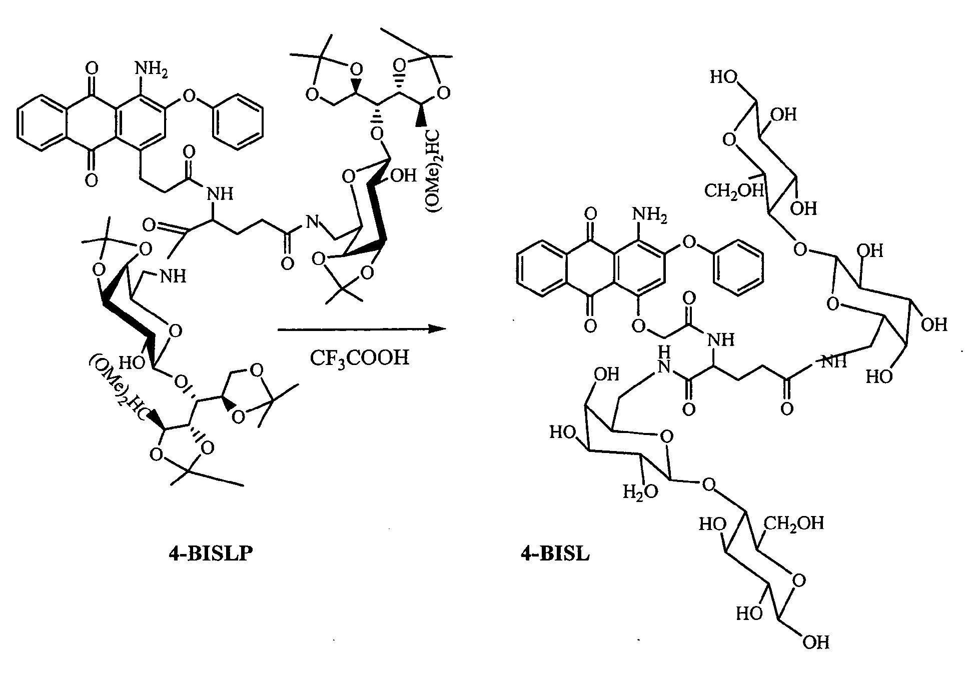

A solution of **4-BISLP** (2.00g, 1.33 mmol) in 90% aqueous CF₃COOH (15 mL) was stirred at room temperature over night. The TLC (dichloromethane/methanol: 10/0.7) indicated that the starting material (*Rf*. 0.35) was completely reacted and the formation of the deprotected compound **4-BISL** (*Rf*. 0.1) was taking place. The violet solution was evaporated to dryness and repeatedly co-evaporated with toluene (5 x 25 mL) at reduced pressure to give the final product (1.56g, 98%) as a red powder.

### EXAMPLE 28

### Synthesis of 1-[2-(2'-oxo-ethylacetate)-ethylamino)-4-methylamino-anthraquinone 5-L

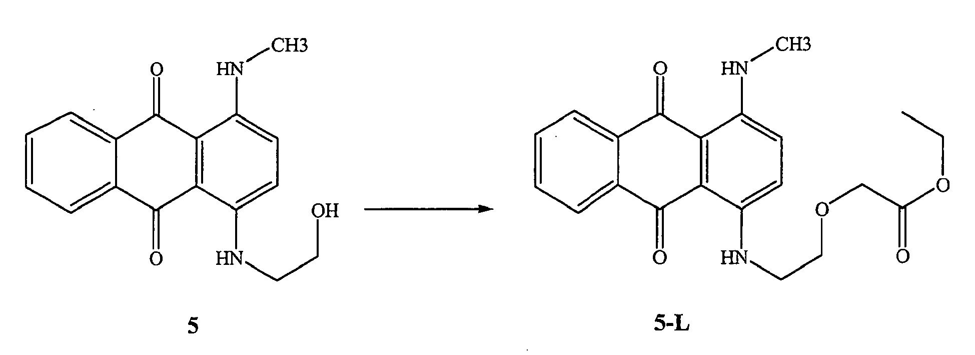

8.6 g of D5 (30.5 mmol) were solved in 60 ml of THF, and added with 12.9 ml (305 mmol) of triethylamine. The mixture was stirred at room temperature for 1 hour, then 6.8 ml (61 mmol) of bromo-acetic acid ethyl ester and a catalytic quantity of crown ether 18-crown-6 were also added.

The mixture, after 48 H stirring at room temperature, gave a crude product, then solved in 100 ml of ethyl acetate and transferred in a separatory funnel where 3 successive portion of 100 ml of water were added. After the washings with water, the organic phase was concentrated under reduced pressure and the raw (obtained as a blue solid) purified through FCC (stationary phase: silica gel, eluent: ethyl acetate-petroleum ether 3:1; R_{f}**(2)=** 0.86). Finally, 9.8 g of a dark blue solid were obtained **(5-L)** (yield: 87%).

### EXAMPLE 29

### Synthesis of 1-[2-(2'-oxo-acetic acid)-ethylamino)-4-methylamino-anthraquinone 5-LS

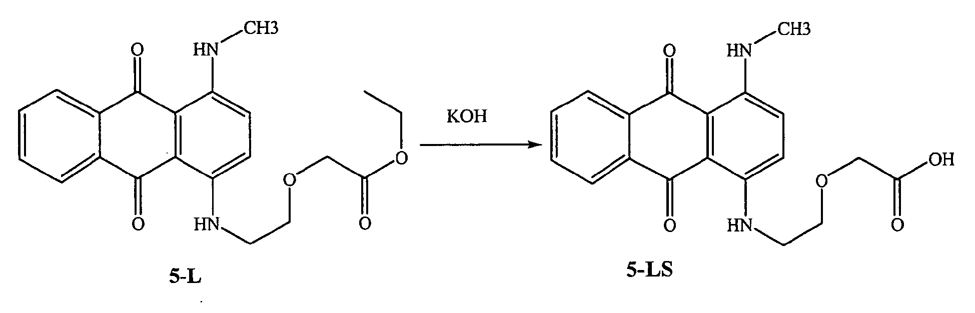

9.8 g of **5-L** were solved in 50 ml of dioxane, and added with a solution of 4.5 g (79.6 mmol) of KOH in 50 ml of water is added. The mixture was stirred at room temperature for 48 hours, then the resulting raw material was solved in 200 ml of ethyl acetate and transferred in a separatory funnel where 300 ml of water are added. Three successive washings with water were carried out, the aqueous phase was then acidified with HCl 3 M and extracted with ethyl acetate. The organic phase were unified and concentrated under reduced pressure. The resulting raw (obtained as a dark blue solid) was purified through FCC (stationary phase: silica gel, eluent: ethyl acetate; R_{f}**(3)**= 0.91), and gave 8.4 g **5-LS** (yield: 93%), soluble in basic conditions.

### EXAMPLE 30

### Synthesis of 1-[2-(2'-oxo-acetyl)-ethylamino)-4-methylamino-anthraquinone-(diethyl ester)-1'-glutamic amide 5-GL

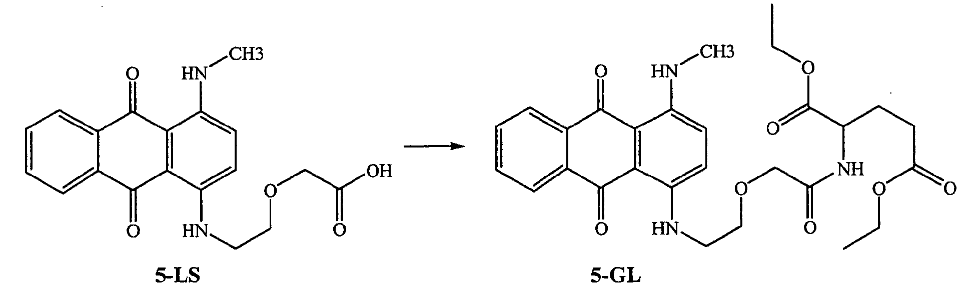

5 ml Of triethylamine were added to 8.4 g of product **5-LS** solved in 500 ml of THF. The resulting mixture is left stirring for 10 min at room temperature, then 2 ml of ethylchloroformate were added. The mixture was again stirred for 30 min at room temperature, then 5 ml of triethylamine and 5.4 g of 1,3-bis-ethoxycarbonyl-propylammonium chloride were added and the mixture stirred for further 12 hours at room temperature. After this period of time, the raw material was solved in 300 ml of dichloromethane and extracted with 300 ml of aqueous HCl 3M The organic phase was then concentrated (reduced pressure) and the raw obtained as a blue solid was purified through FCC (stationary phase: silica gel, eluent: dichloromethane: methanol 50:1 R_{f} = 0.69). 8.8 g of a blue solid were obtained **5-GL** (yield: 72%).

### EXAMPLE 31

### Synthesis of 1-[2-(2'-oxo-acetyl)-ethylamino)-4-methylamino-anthraquinone-1'-glutamic acid 5-GLS.

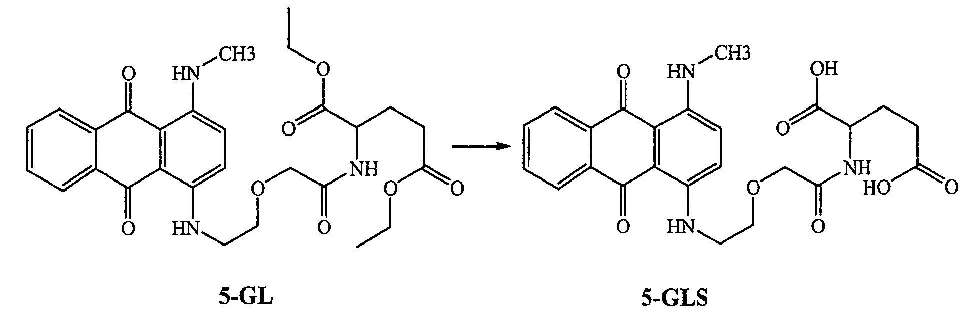

A solution of 7.4 g (131.2 mmol) of KOH in 500 ml of water was added to 8.8 g of product **5-GL** solved in 500 ml of THF. The mixture was stirred at room temperature for 15 hours, then the crude material was solved in 400 ml of ethyl acetate extracted with 400 ml of water acidified with a HCl 3 M. The aqueous acidic phase was in turn extracted with ethyl acetate, added to the originary organic phase, and then concentrated under reduced pressure to give a solid product, not requesting further purification. This solid blue material consisted of 7.0 g of **5-GLS** (yield: 88%).

### EXAMPLE 32

### Synthesis of 1-[2-(2'-oxo-acetyl)-ethylamino)-4-methylamino-anthraquinone-1'-glutamic-bis {2,3:5,6-bis-O-(1-methylethylidene)-4-O-[3,4-O-(1-methylethylidene)-6-O-[(amido)-β-D-galactopyranosyl]-aldehydo-D-glucose-dimethyl acetal} amide 5-BISLP

15 g of compound **5** (28.8 mmol) were added to 7.0 g of compound **5-GLS** (14.4 mmol) solved in 200 ml of THF, 4.3 g of EDC (36 mmol), 5.3 ml of triethylamine (36 mmol) and 0.3 g of dimethylaminopyridine (1.4 mmol). The mixture was stirred for 72 hours at room temperature; then the raw material was solved in 200 ml of dichloromethane and washed with water many times. The organic phase was dried, filtered, and concentrated under reduced pressure. The resulting blue solid was purified through FCC (stationary phase: silica gel, eluent: ethyl acetate: ammonium hydroxide 100:1 R_{f} = 0.21), finally giving .9.0 g of **5-BISLP** (yield: 42%). This adduct is soluble in water when pH> 7

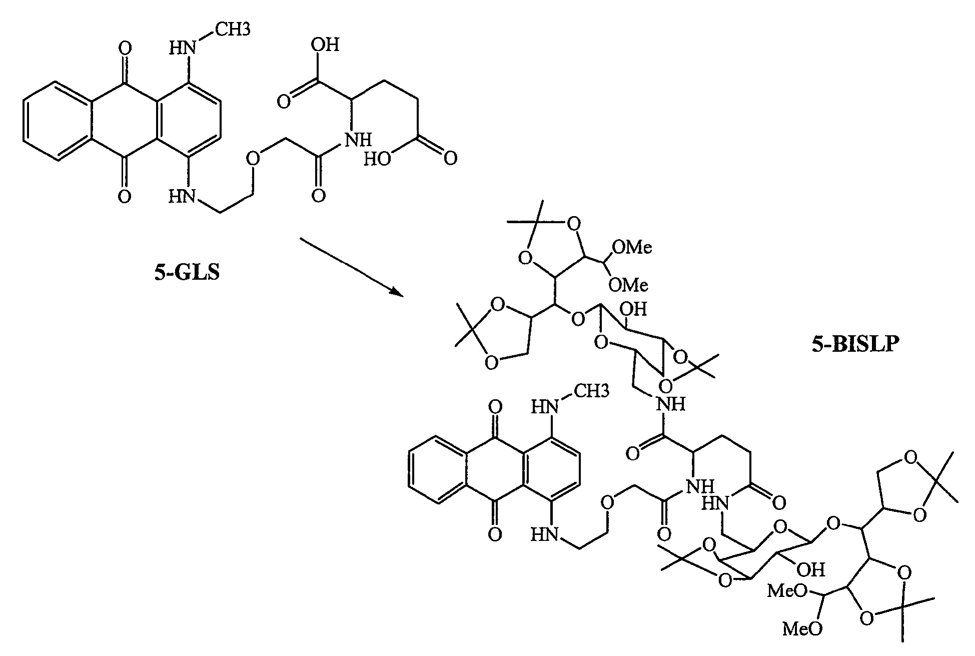

### Example 33

### Synthesis of 1-[2-(2'-oxo-acetyl)-ethylamino)-4-methylamino-anthraquinone-1'-glutamic-bis (6'-amido-lactosyl) amide 5-BISL

9.0 g Of compound **5-BISLP** were solved in 30 ml of trifluoroacetic acid and stirred 12 hours at room temperature; later the mixture was concentrated under reduced pressure obtaining, without further purification, 6.8 g of a blue solid **5-BISL** (yield: >99 %).

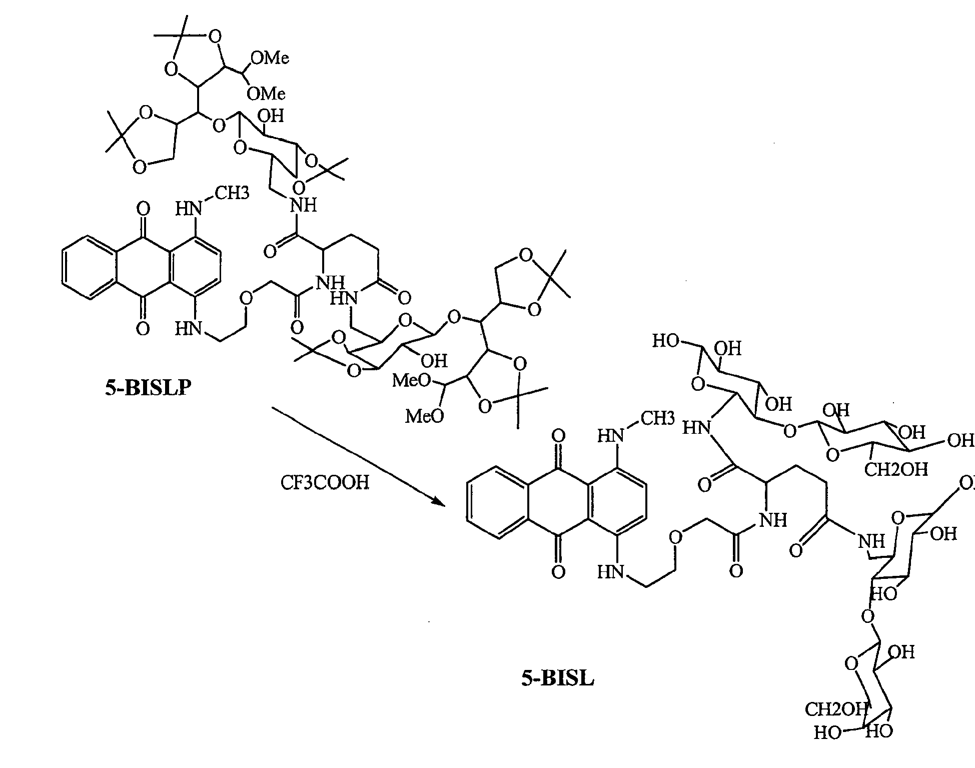

### Example 34

### Synthesis of 2,3:5,6-bis-O-(1-methylethylidene)-4-O-[6-O-(2-methoxy-2-methylethyl)-2-O-(4-bromobutyl)-3,4-O-(1-methylethylidene)-β-D galactopyranosyl]-aldehydo-D-glucose, dimethyl acetal LPE

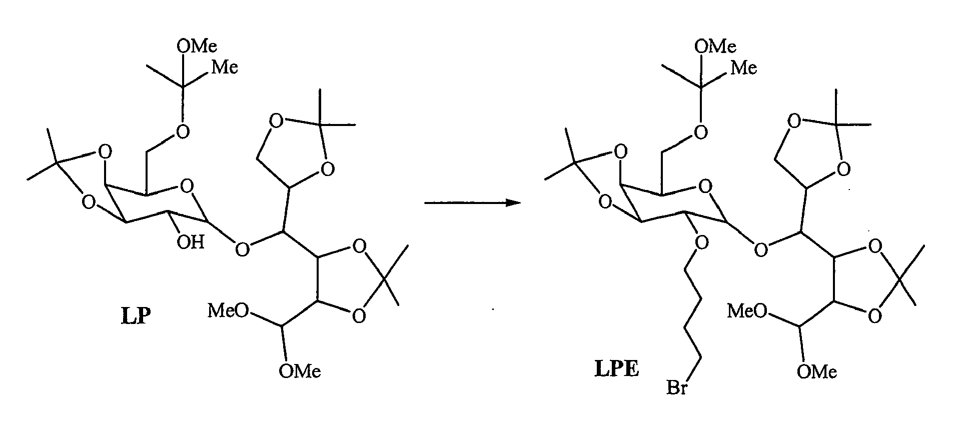

1.95 ml Of 1,5dibromopentane (25.9 mmol), 1.9 g of KOH (34.4 mmol), and a catalytic quantity of crown ether 18-crown-6 were added to 5.0 g of pure compound **LP** (8.6 mmol) solved in 100 ml of THF. **LP** comes out as secondary product in the synthesis of **1** (see above). The mixture was stirred 12 hours at room period, then the raw material is then filtered through a Celite layer. The liquid, organic phase was then concentrated under reduced pressure to give a raw as a white solid. Purified through FCC (stationary phase: silica gel, eluent: ethyl acetate, R_{f} = 0.73 it consisted of 3.3 g of **LPE** (yield: 53%).

### EXAMPLE 35

### Synthesis of 2,3:5,6-bis-O-(1-methylethylidene)-4-O-[2-O-methyl-6-O-(2-methoxy-2-methylethyl)- 3,4-O-(1-methylethylidene)-β-D galactopyranosyl]-aldehydo-D-glucose, dimethyl acetal LPP

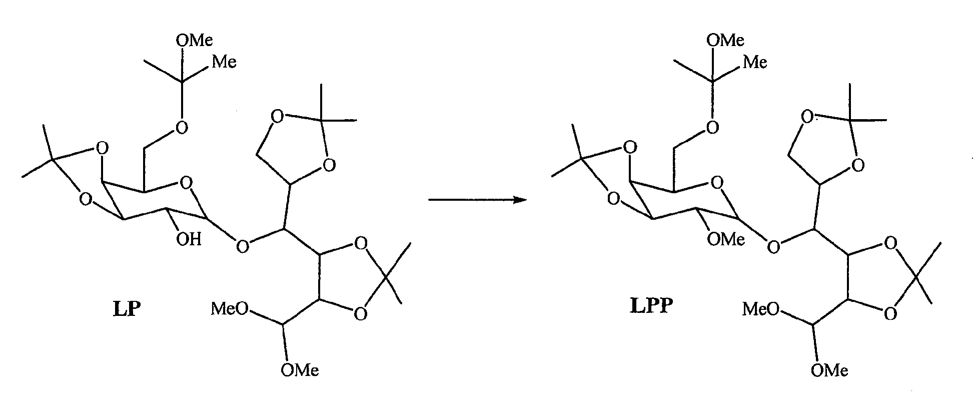

1.44 ml Of methyl iodide (25.8 mmol) and 0.71 g of KOH (12.9 mmol) were added To 5.0 g of pure compound **LP** (8.6 mmol) solved in 100 ml of THF. The mixture was stirred 2 hours at 120° C, then 12 hours at room temperature; and then the crude material was filtered through a Celite layer. The liquid organic phase is then concentrated under reduced pressure and the raw was purified through FCC (stationary phase: silica gel, eluent: ethyl acetate, R_{f} = 0.68), giving 3.2 g of a pale yellow solid **LPP** (yield: 63%).

### Example 36

### Synthesis of 2,3:5,6-bis-O-(1-methylethylidene)-4-O-[2-O-methyl-3,4-O-(1-methylethylidene)-β-D galactopyranosyl]-aldehydo-D-glucose, dimethyl acetal LPP

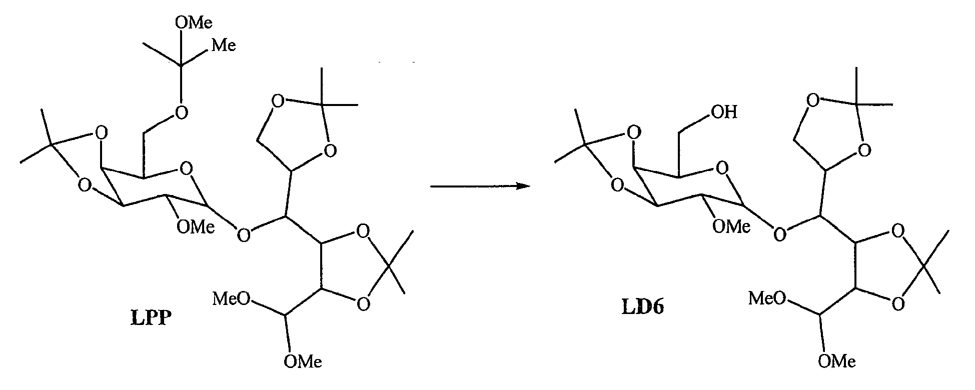

3.2 g Of pure compound **LPP** (5.4 mmol) were solved in 100 ml of a mixture of dichloromethane-HCl (5% aqueous solution) 1:1. The mixture was stirred 12 hours at room temperature, then the organic phase was concentrated under reduced pressure and a crude product was obtained, which was purified through FCC (stationary phase: silica gel, eluent: ethyl acetate, R_{f} = 0.49), consisting of 1.3 g **of LD6** as a white solid. (yield: 47%).

### EXAMPLE 37

### Synthesis of 2,3:5,6-bis-O-(1-methylethylidene)-4-O-{2-O-[2-O-methyl-1-O-(2,3:5,6:di-O-(1-methylethylidene)-aldehydo-D-glucose-1-dimethyl acetal-4-yloxy)-butyl]-3,4-O-(1-methylethylidene)]-β-D-galactopyranos-6-yloxy}-aldehydo-D-glucose, dimethyl acetal TP

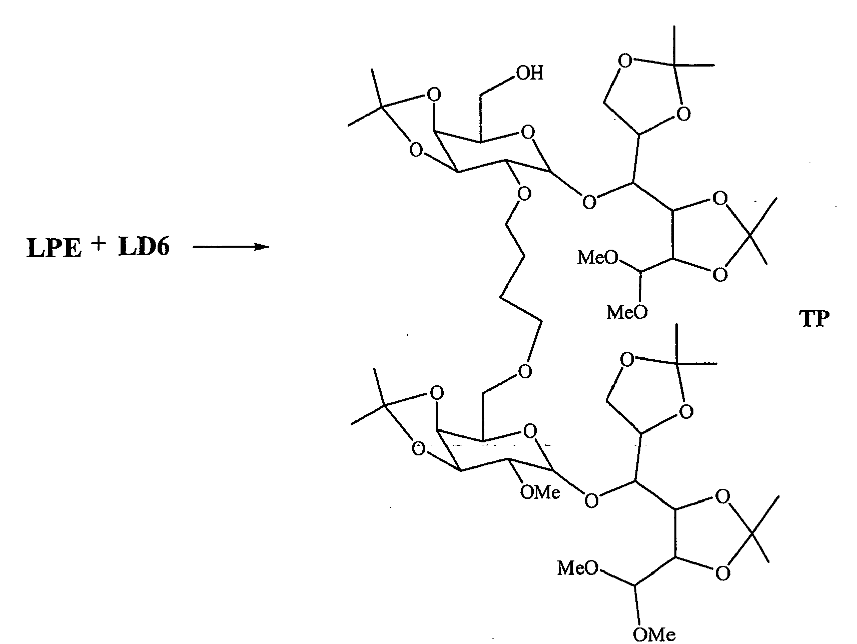

1.3 g of compound **LPE** (2.5 mmol) solved in 50 ml of THF, and 3.3 g of compound **LD6** (4.5 mmol) were mixed and added with 0.06 g of sodium hydride (2.5 mmol) 0° C. The mixture was stirred 30' at 0° C, then 12 hours at room temperature; after this period the organic phase was concentrated under reduced pressure. Since the final product contained some quantities of unreacted starting reagents, a simple protocol was developed: the raw was first purified through FCC (stationary phase: silica gel, eluent: ethyl acetate) to remove non reacted **LPE.** The remaining product was solved in 50 ml of pyridine and 1.0 ml of acetic anhydride. The mixture was stirred 12 hours at room temperature; after this period the reaction contained the product TP together with the acetate derivative of reagent LD6. The organic phase was then concentrated under reduced pressure and the raw (obtained as white solid) washed with portions of 500 ml of a HCl 5% aqueous solution and 500 ml of dichloromethane. The organic phase was again concentrated and purified through FCC (stationary phase: silica gel, eluent: ethyl acetate: petroleum ether 3:7 R_{f} = 0.15). 1.56 g of TP as a white solid were obtained (yield: 57%).

### Example 38

### Synthesis of 2-{p-phenylazo[2'-methoxy-4'(p-nitrophenylazo)]phenyl} monosuccinate D3-MS

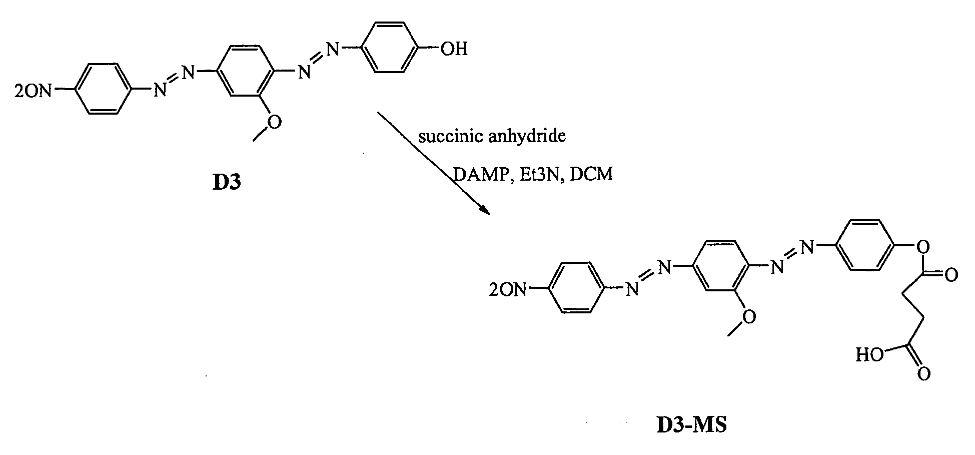

A mixture of the disperse dye **D3** (3.20 g, 8.48 mmol), succinic anhydride ( 1.02 g, 10.12 mmol), 4-dimethylaminopyridine (103 mg, 0.85 mmol) and triethylamine (0.5 ml) was dissolved in CH₂Cl₂ (80 ml) and stirred at room temperature, until the starting dye was almost completely disappeared by TLC analysis. After 20 h stirring, H₂O (80 ml) was added to the reaction mixture that after, neutralization by drop-wise addition of AcOH, was repeatedly extracted with CH₂Cl₂. The organic phase was dried with Na₂SO₄, concentrated under reduced pressure and the resulting orange residue was purified through flash chromatography (EtOAc, then EtOAc + 1% AcOH) to give D3-MS as a granular orange solid (3.72 g, 92%), *R_{f}*, 0.57 - ethyl acetate + 1% acetic acid).

### Example 39

### Synthesis of {2-{p-phenylazo[2'-methoxy-4'(p-nitrophenylazo)]phenyl}}-{2,3:5,6-bis-O-(1-methylethylidene)-4-O-{2-O-[2-O-methyl-1-O-(2,3:5,6:di-O-(1-methylethylidene)-aldehydo-D-glucose-1-dimethyl acetal-4-yloxy)-butyl]-3,4-O-(1-methylethylidene)]-β-D-galactopyranos-6-yloxy}-aldehydo-D-glucose, dimethyl acetal} succinate D3-SL-TP

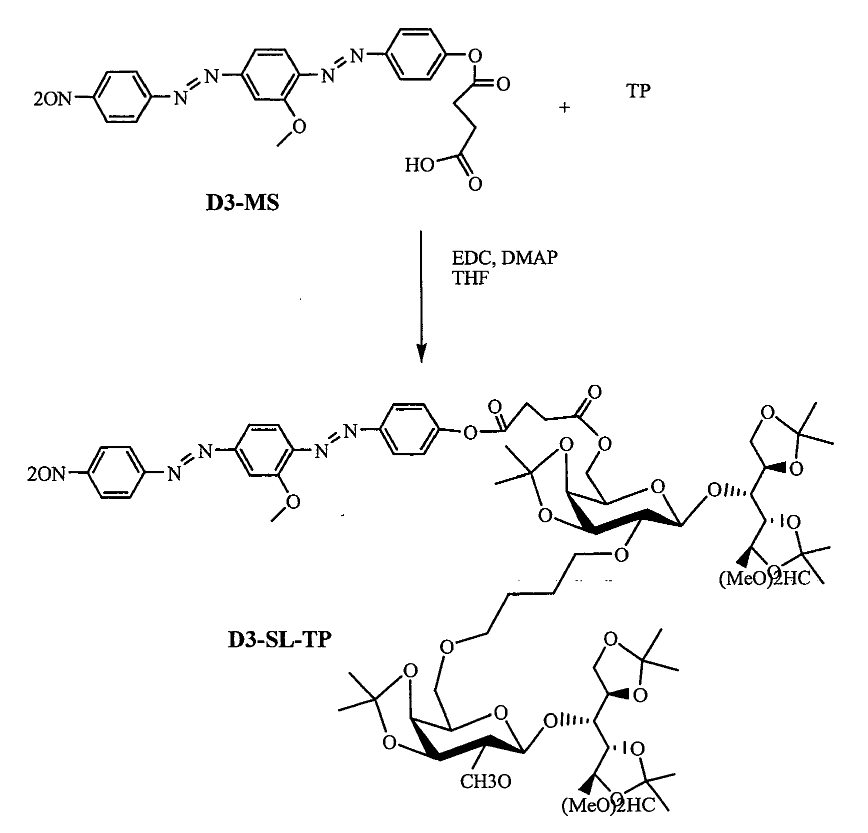

To a solution **of D3-MS** (1.37 g, 2.86 mmol) in 50 ml of dry tetrahydrofurane was added **TP** (3.26 g, 3.43 mmol), *N*'-(3-dimethylaminopropyl)-*N*-ethylcarbodiimide hydrochloride (0.66 g, 3.43 mmol), and 4-dimethylaminopyridine (96 mg, 0.80 mmol) and the reaction mixture was allowed to react at room temperature for 36 h, the concentrated at reduced pressure. The resulting residue was diluted with ethyl acetate (80 mL) and washed with saturated aqueous NaHCO3 (40 ml) and brine (40 ml). The organic phase was dried with Na2SO4, concentrated to dryness under reduced pressure and the resulting syrupy residue was submitted to flash chromatography on silica gel eluting with 3/1 petroleum ether/ethyl acetate obtaining D3-SL-TP (3.67 g, 91%) as a brilliant orange laque; Rf, 0.42 (3/1 petroleum ether/ethyl acetate).

### Example 40

### Synthesis of {2-{p-phenylazo[2'-methoxy-4'(p-nitrophenylazo)]phenyl}}-{4-[2-O-methyl-lactos-6'-yloxy]-butyl-lactos-6'-yloxy} succinate D3-SL-T

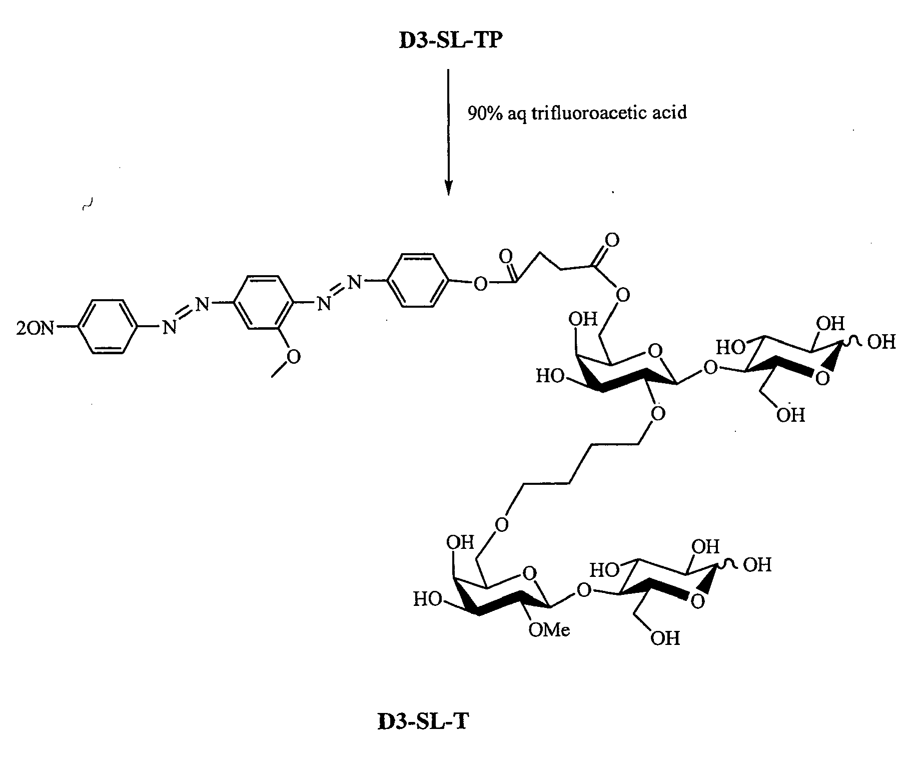

A solution **of D3-SL-TP** (2.25 g, 1.60 mmol) in 90% aq CF₃COOH (20 ml) was stirred at room temperature for. 1.5 h and then repeatedly coevaporated with toluene at reduced pressure. The resulting residue was dissolved into THF and neutralized by stirring over solid NaHCO₃. The concentration of the solvent to dryness gave **D3-SL-T** as a granular brilliant orange solid (1.78 g, almost quantitative yield).

The dyeing ability of the present glycoconjugated colouring agents, has been verified in comparison with corresponding starting dyes, not modified with sugar molecules.

It is important to note that while the corresponding non-glycoconjugated disperse dyes are suitable for dying synthetic fibres only, the present modified dyes are able to dye in an homogeneous way also natural fibres and textile materials including different fibres, and specifically mixed hydrophobic and hydrophilic fibres.

Also, a better interaction dye-fibre has been obtained with the present dyes on all type of tested fibres, for example cellulosic fibres, like cotton; proteic ones, like wool and silk; hydrophobic fibres, like polyester, nylon, acrylic, polyacetate and also on mixed ones.

The considerably affmity of the present dyes towards textile fibres of whatever nature, makes them advantageous not only because they are "universal", but because they also allow to obtain a dyeing process using reasonable quantities of dye and to work in conditions of almost complete depletion of polluting charge directly in the dyeing bath, therefore avoiding a relevant pollution of the dyes in excess.

A further advantage of the present colouring agents is the fact that the bond with glycosidic moiety increases its biodegradability through digestion by micro organisms, that found in the molecule itself a useful nourishment for their survival and proliferation.

The present colouring agents are used in form of powder or paste, or aqueous dispersion that, besides the colouring agent of the invention, may possibly comprise textile assistants commonly used in this field.

The prepared products have been analysed by mass spectrometry, confirming exactly the structure described, and by NMR. The NMR spectra have been registered with a Varian Gemini 200 MHz

*Legenda:* in the phormulae: **D,** stands for **dye, L** means linker, **LS** means saponified linker, **GL** is for glutammic linker, **GLS** for saponified glutammic linker, **BISLP** indicates bislactate protected, while **BISL** is bislactate, deprotected. **MONOP** stands for monolactate protected, **MONOL** is for monolactate deprotected. **LP** is protected lactose, **LPE** protected and etherificated lactose, **LPP** lactose protected both on 2' and 6' positions, and **TP** Proyected tetrasaccharide; **MS** represents monosuccinate, **SL** succinyl linker..

Also, DMTMM indicates dimethoxymethyl morpholinium, EDC is N-(3-dimethylaminopropyl)-N'-ethyl-carbodiimide hydrochloride.

## Claims

1. Disperse dyes soluble in water comprising at least two sugar moieties, wherein the dye moiety has molecular weight higher than 250.

2. Disperse dyes according to claim 1 disperse of general formula (I)
D-L-Sₙ (I)
wherein:
D is a disperse dye insoluble in water
L is a linker
S is a sugar
n is comprised between 2 and 4

3. Disperse dye according to claim 2 wherein the disperse dye insoluble in water comprises at least an acidic group or a group that can easily transformed into an acidic group.

4. Disperse dye according to Claim 3 wherein said dye insoluble in water is chosen in the group consisting of: 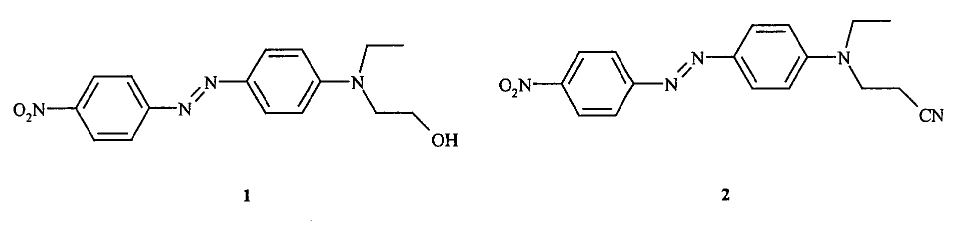 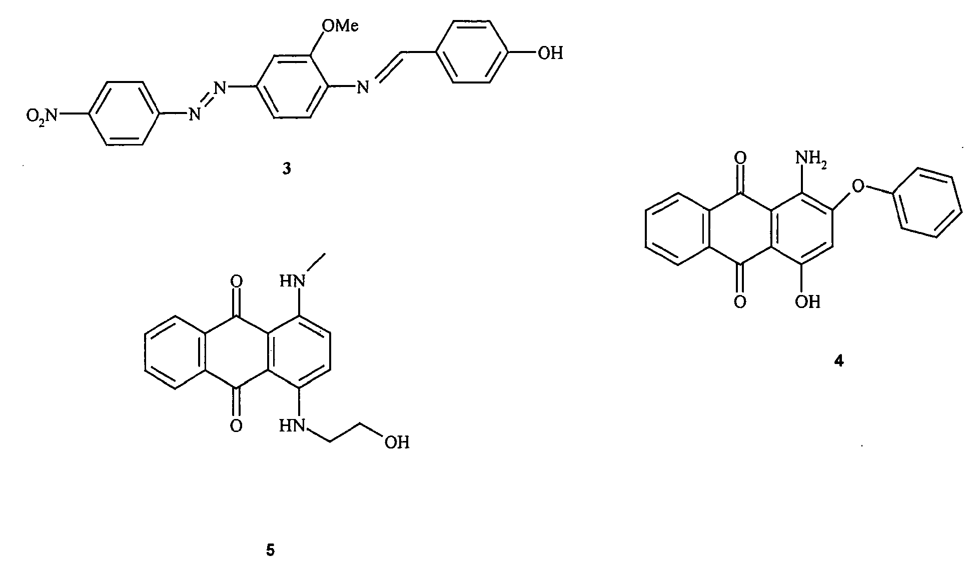 or their known derivatives wherein the aryl-rings are variously substituted.

5. Disperse dyes according to Claims 1 - 4 wherein the L is chosen in the group consisting of: 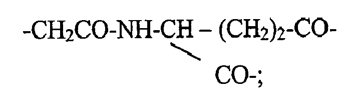 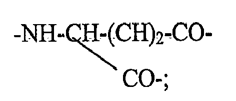 -CO- (CH₂)₂-CO-

6. Disperse dyes according to claim 1 - 5 wherein the sugar is a mono- o di-saccharide.

7. Disperse dye according to Claim 6 wherein said sugar is chose in the group consisting of: lactose, cellobiose, saccarose and the corresponding amino-derivatives.

8. Process for the preparation of compounds according to claims 1 - 7 wherein:
- the chosen dye, if necessary derivatized in order to obtain an acidic group, is reacted with either glutammic acid or the succinic anhydride;
- the so obtained intermediates are reacted with two molecules of amino-sugar or sugar respectively wherein the free hydroxylic groups except one have been protected to give a product in which the dye is bound to one or two sugar or amino-sugar through the linker;
- the sugar moiety is deprotected to give the desired final colouring agent.

9. Process according to claim 7 wherein the deprotection reaction is carried out by acid hydrolysis.

10. Compounds of formula 1 according to Claim 1 chosen among the following:
*N*-Ethyl-*N*-(2-(2'-carboxyglutamic bis[6'amidoyl-lactose]-1'-amido)ethyloxy)-4-(4-nitrophenyl-azo)aniline
N-ethyl, N-(3-carboxyamido-bis(6'amidoyl-lactose)-1'-glutammate)-4-nitrophenyl)phenylazo)-aniline
2- {*p*-phenylazo[2'-methoxy-4'(*p*-nitrophenylazo)]phenoxy}-acetyl-1'-glutamic-bis (6'amido-lactose)amide
Bis-[6'-aminolactosyl]-1'-glutamic[2-(1-amino-2-phenoxy-4-oxy)]acetyl amide 1-[2-(2'-oxo-acetyl)-ethylamino)-4-methylamino-anthraquinone-1'-glutamic-bis (6'-amido-lactosyl) amide
{2-{*p*-phenylazo[2'-methoxy-4'(*p*-nitrophenylazo)]phenyl}}-{4-[2-O-methyl-lactos-6'-yloxy]-butyl-lactos-6'-yloxy} succinate.

11. Use of compounds according to claims 1 - 7 and 10 for dying synthetic or natural fibres or textiles materials including mixed hydrophobic and hydrophilic fibres.

12. Se according to claim 11 wherein said fibres are chosen among: cotton, wool, silk, polyester, nylon, acrylic, polyacetate and their mixtures.

13. Use of the products according to claims 11 and 12 wherein said compounds are in the form of powder, paste or aqueous dispersion that may also comprise the commonly used textile assistant.
